# EUROPÄISCHE PATENTSCHRIFT

(11) **EP 0 299 572 B1**
(45) Veröffentlichungstag und Bekanntmachung des Hinweises auf die Patenterteilung: **08.12.1993**
(21) Anmeldenummer: 88201444.2
(22) Anmeldetag: 08.07.1988
(51) Int. Cl.: G10L 5/06

(54) **Verfahren zur Erkennung von zusammenhängend gesprochenen Wörtern**
Method for connected word recognition
Procédé pour la reconnaissance de mots enchaînés

(30) Priorität: 11.07.1987 DE 3723078
(43) Veröffentlichungstag der Anmeldung: 18.01.1989
(73) Patentinhaber: Philips Patentverwaltung GmbH, 22335 Hamburg (DE); Philips Electronics N.V., 5621 BA Eindhoven (NL)
(72) Erfinder: Paeseler, Annedore, D-2000 Hamburg 54 (DE)
(74) Vertreter: Poddig, Dieter, Dipl.-Ing.

(56) Entgegenhaltungen:
- DE-A- 2 524 804
- DE-A- 3 215 868
- DE-A- 3 335 343

## Beschreibung

Die Erfindung betrifft ein Verfahren zur Erkennung eines aus zusammenhängend gesprochenen Wörtern abgeleiteten Sprachsignals, das aus einer zeitlichen Folge von Sprachwerten besteht, von denen jeder einen Abschnitt des Sprachsignals angibt, wobei die Sprachwerte mit vorgegebenen gespeicherten Referenzwerten verglichen werden, von denen jeweils eine Gruppe von Referenzwerten ein Wort eines vorgegebenen Vokabulars darstellt, und die Vergleichsergebnisse über verschiedene Folgen von Kombinationen von Referenzwerten und Sprachwerten je Folge aufsummiert werden und nur solche Folgen von Wörtern berücksichtigt werden, deren Reihenfolge gemäß einer vorgegebenen gespeicherten ersten Liste zulässig sind, die für vorgegebene syntaktische Kategorien je Kategorie mindestens eine Zuordnung zu einer Kombination von weiteren syntaktischen Kategorien und/oder Wörtern enthält.

Ein derartiges Verfahren ist bekannt aus "Proc. ICASSP IEEE Conf. ASSP", Dallas, April 1987, S. 69-72. Bei diesem bekannten Verfahren ist die erste Liste in zwei Unterlisten aufgeteilt, die einerseits die Zuordnung zwischen Wörtern und vorgegebenen syntaktischen Kategorien sowie andererseits die Zuordnung dieser Kategorien zu gegebenenfalls zwei anderen, untergeordneten Kategorien angeben. Beide Listen werden bei jedem neuen Sprachsignal verwendet, indem immer wieder rückwärts betrachtet wird, welche Kategorie den vergangenen Sprachabschnitt am besten erklärt. Am Ende des Sprachsignals kann die Folge der Wörter zurückverfolgt werden, die die kleinste Gesamtsumme aller Vergleichsergebnisse ergeben hat und die außerdem der durch die beiden Listen gegebenen Grammatik entspricht. Durch die Betrachtung nach rückwärts bei jedem neuen Sprachsignal kann es jedoch geschehen, daß eine Folge nicht unmittelbar bis zum Anfang zurückverfolgt wird und somit des Verfahrens schließlich zwei oder sogar mehr Teilfolgen innerhalb des Sprachsignals erkennt, die für sich jeweils grammatisch richtig sind, wobei die Teilfolgen jedoch nicht grammatisch zueinander passen.

Aufgabe der Erfindung ist es daher, ein Verfahren der eingangs genannten Art anzugeben, das zuverlässiger arbeitet und weniger Anforderungen an die Form, d.h. die Zuordnungen der ersten Liste stellt, so daß einer syntaktischen Kategorie auch mehr als zwei weitere syntaktische Kategorien und/oder Wörter zugeordnet werden können.

Diese Aufgabe wird erfindungsgemäß dadurch gelöst, daß eine zweite Liste, die mindestens Hinweise auf die Referenzwerte aller derjenigen Wörter, die mit dem jeweils nächsten Sprachwert verglichen werden, sowie je Wort eine Folgenummer enthält, und
eine dritte Liste während des Ablaufs des Verfahrens erzeugt werden, die für jeden Sprachwert, der mit dem letzten Referenzwert mindestens eines Wortes verglichen worden ist, eine Gruppe mit jeweils mehreren Einträgen enthält, von denen jeder Eintrag außer einer momentanen Folgenummer
a) einen Hinweis auf eine syntaktische Kategorie der ersten Liste,
b) eine erste Angabe für eine Folge von verglichenen Wörtern und/oder syntaktischen Kategorien, die Folgen von bereits verglichenen Sprachwerten zugeordnet sind,
c) eine zweite Angabe für eine Folge von Wörtern und/oder syntaktischen Kategorien, die aufgrund der ersten Liste den noch folgenden Sprachwerten zugeordnet werden kann,
d) eine dem jeweiligen Eintrag zugeordnete weitere Folgenummer,
e) einen ersten Bewertungswert,
f) einen zweiten Bewertungswert und
g) eine Folge von verglichenen Wörtern enthält,
   - daß mindestens nach jedem Vergleich eines neuen Sprachwertes mit dem letzten Referenzwert mindestens eines Wortes eine neue Folgenummer bestimmt wird und nach jedem solchen Vergleich die zu der Folgenummer, die in der zweiten Liste bei diesem Wort gespeichert ist, gehörende Gruppe von Einträgen der dritten Liste auf solche Einträge durchsucht wird, in denen die in der zweiten Angabe enthaltene Folge mit dem verglichenen Wort beginnt, und für jeden solchen vorhandenen Eintrag ein neuer Eintrag für die zur neuen Folgenummer gehörende neue Gruppe der dritten Liste abgeleitet wird,
   - daß danach für jeden neuen Eintrag, bei dem die in der zweiten Angabe enthaltene verkürzte Folge mit einer syntaktischen Kategorie beginnt, für die in der ersten Liste mindestens eine Zuordnung vorhanden ist, erste weitere Einträge in der neuen Gruppe vorgenommen werdenund ferner für jeden der neuen und ersten weiteren Einträge der neuen Gruppe, für den die zweite Angabe eine leere Folge enthält, ein zweiter weiterer Eintrag für die neue Gruppe abgeleitet wird,
   - daß die Ableitung und Vornahme der ersten und zweiten weiteren Einträge abwechselnd so oft wiederholt wird, bis nach mindestens einem ersten weiteren Eintrag kein zweiter weiterer Eintrag erfolgt,
   - daß danach für alle Einträge der neuen Gruppe, bei denen die zweite Folge mit einem zu erkennenden Wort beginnt, ein Hinweis auf die Referenzdaten dieses Wortes in die zweite Liste eingetragen wird,
   - daß danach der nächste Sprachwert mit den Referenzwerten aller in der zweiten Liste enthaltenen Wörter verglichen wird und
   - daß dieser Ablauf von Verfahrensschritten wiederholt wird bis zum letzten Sprachwert des zu erkennenden Sprachsignals, nach dessen Verarbeitung die letzte Gruppe der dritten Liste auf alle Einträge geprüft wird, die einen Hinweis auf die syntaktische Anfangs-Kategorie und als zweite Angabe eine leere Folge und als Folgenummer diejenige der ersten Gruppe enthalten, und aus demjenigen dieser Einträge, der den kleinsten ersten Bewertungswert aufweist, die Folge von verglichenen Wörtern ausgelesen und ausgegeben wird.

Das erfindungsgemäße Verfahren verbindet die Vorteile einer rückwärts gerichteten Hypothetisierung von grammatisch korrekten Fortsetzungen für den bereits verarbeiteten Teil des Sprachsignals mit einer vom Anfang beginnenden zusammenhängenden Verifikation dieser Hypothesen. Ferner wird durch das erfindungsgemäße Verfahren erreicht, daß nur diejenigen Wörter bzw. die dazu gehörenden Referenzwerte mit den eingehenden Sprachwerten verglichen werden, die aufgrund der in der ersten Liste festgelegten Grammatik zulässig sind. Als Sprachwerte können Abtastwerte des Sprachsignals verwendet werden, die in 10 ms Abstand gewonnen und in ihre Spektralwerte zerlegt wurden. Es können jedoch auch andere Maßnahmen zur Aufbereitung der Sprachabtastsignale verwendet werden, ebenso können die Sprachwerte auch aus mehreren Abtastwerten gewonnen werden und beispielsweise Diphone oder Phoneme oder noch größere Einheiten darstellen, was für das erfindungsgemäße Verfahren keinen wesentlichen Unterschied darstellt.

Das erfindungsgemäße Verfahren hat gewisse formale Ähnlichkeiten mit einem Verfahren, das in "Comm. of the ACM", Vol. 13, No. 2, Febr. 1970, S. 94-102, beschrieben ist. Dieses Verfahren dient jedoch dazu, schriftlich und damit eindeutig vorliegende Sätze in ihre grammatischen Bestandteile zu zerlegen. Bei der automatischen Erkennung zusammenhängend gesprochener Sprache ergeben sich jedoch daraus Probleme, daß die Sprechweise und Sprechgeschwindigkeit variieren und die Übergänge zwischen den Wörtern fließend sind. Die Wörter innerhalb eines Satzes können deshalb nicht sicher, sondern nur mit einer bestimmten Wahrscheinlichkeit bestimmt werden. Während der Erkennung müssen daher viele verschiedene Hypothesen für Wörter bzw. Wortfolgen betrachtet werden. Für eine automatische Erkennung ist nun diejenige Wortfolge zu bestimmen, die mit der größten Wahrscheinlichkeit gesprochen wurde.

Aus der Unsicherheit der Eingabedaten folgt, daß bei einem größeren Vokabular, z.B. von mehreren 100 Wörtern, jeder neu eingehende Sprachwert mit einer sehr großen Anzahl verschiedener Referenzwerte verglichen werden muß, die sich aus der Kombination aller Wörter ergibt, wobei die Wörter wegen der nicht exakt möglichen Bestimmung der Wortgrenzen mit verschiedenen Längen gegenüber den Referenzwörtern vorkommen. Wenn die Einschränkungen, die die Grammatik den Kombinationsmöglichkeiten von Wörtern auferlegt, berücksichtigt werden, kann die Anzahl der Wörter und damit der Referenzwerte eingeschränkt werden, mit denen jeder neue Sprachwert verglichen werden muß.

Der Vergleich der Sprachwerte mit den Referenzwerten erfolgt zweckmäßig nach der Methode der dynamischen Programmierung, die beispielsweise aus der DE-OS 32 15 868 bekannt ist, durchgeführt werden. Sie ermöglicht die Anpassung an unterschiedliche Sprechgeschwindigkeit sowie das Auffinden des wahrscheinlichsten Worts.

Durch die Verwendung der zweiten Liste und den speziellen Aufbau der dritten Liste ist das erfindungsgemäße Verfahren im wesentlichen festgelegt. Ein besonders günstiger Ablauf, insbesondere auch hinsichtlich der Rechenzeit, ergibt sich nach einer Ausgestaltung der Erfindung dadurch,
- daß vor dem Vergleich des ersten Sprachwertes die erste Gruppe in ersten Einträgen je einen Hinweis auf eine syntaktische Anfangs-Kategorie, als erste Angabe eine leere Folge, als zweite Angabe je eine andere der der Anfangs-Kategorie zugeordneten Kombinationen und für die beiden Bewertungswerte einen Anfangswert sowie in weiteren Einträgen alle aus den Kombinationen der zweiten Angabe ableitbaren Kategorien mit je zugehöriger Kombination enthält, daß jeder neue Eintrag in der ersten Angabe eine um das verglichene Wort verlängerte Folge, in der zweiten Angabe eine um das verglichene Wort verkürzte Folge, als ersten Bewertungswert den um die Summe der Vergleichsergebnisse des Wortes erhöhten Bewertungswert, als Folge von verglichenen Wörtern die um das verglichene Wort verlängerte Folge und im übrigen die Werte des vorhandenen Eintrags erhält,
- daß die ersten weiteren Einträge je einen Hinweis auf die syntaktische Kategorie des neuen Eintrags, aus dem dieser erste weitere Eintrag abgeleitet wird, in der ersten Angabe eine leere Folge, in der zweiten Angabe je eine andere der syntaktischen Kategorie zugeordnete Kombination als Folge, als weitere Folgenummer die neue Folgenummer, für beide Bewertungswerte den Bewertungswert des neuen Eintrags und als Folge verglichener Wörter eine leere Folge enthalten,
- daß für jeden zweiten weiteren Eintrag aus derjenigen Gruppe, die in der weiteren Folgenummer des betreffenden neuen oder weiteren ersten Eintrag angegeben ist, derjenige frühere Eintrag ausgelesen wird, bei dem die zur zweiten Angabe gehörende Folge mit der syntaktischen Kategorie beginnt, auf die dieser neue oder erste weitere Eintrag der neuen Gruppe einen Hinweis enthält, wobei der zweite Eintrag den Hinweis auf die syntaktische Kategorie des früheren Eintrags, in der ersten Angabe eine um die syntaktische Kategorie des momentanen neuen oder ersten weiteren Eintrags verlängerte Folge, in der zweiten Angabe eine um dieselbe syntaktische Kategorie verkürzte Folge, als weitere Folgenummer die Folgenummer des früheren Eintrags, als ersten Bewertungswert die Summe aus dem ersten Bewertungswert des früheren Eintrags und der Differenz zwischen den beiden Bewertungswerten des momentanen Eintrags, als zweiten Bewertungswert den entsprechenden des früheren Eintrags und die um die Folge verglichener Wörter des Eintrags der momentanen Gruppe verlängerte Folge von verglichenen Wörtern des früheren Eintrags enthält, und
- daß in die zweite Liste jeder Hinweis auf die Referenzdaten zusammen mit dem zugehörigen ersten Bewertungswert und der Folgenummer des betreffenden Eintrags aufgenommen wird. Auf diese Weise werden die Bewertungen bei der Vervollständigung von erkannten Wortfolgen und bei der Hypothetisierung von korrekten Fortsetzungen besonders günstig berücksichtigt.

Bei dem erfindungsgemäßen Verfahren ist es möglich, daß im Verlauf der Erkennung eines Satzes zwei oder auch mehrere Hypothesen auf einen gemeinsamen Punkt zusammenlaufen, d.h. zwei oder mehrere Hypothesen ergeben dieselbe grammatische Fortsetzung, wobei die Bewertung der zusammenlaufenden Hypothesen allgemein unterschiedlich ist. In diesem Falle ist es nach einer weiteren Ausgestaltung der Erfindung zweckmäßig, daß jeder erste und zweite weitere Eintrag nur vorgenommen wird, sofern in der neuen Gruppe kein Eintrag vorhanden ist, der denselben Hinweis, dieselbe erste und zweite Angabe und dieselbe weitere Folgenummer enthält und in dem der erste Bewertungswert kleiner ist als der erste Bewertungswert des beabsichtigten weiteren Eintrags, und im Falle eines solchen bereits vorhandenen Eintrags, jedoch mit größerem Bewertungswert, dieser gelöscht wird. Dadurch werden also zusammenlaufende Hypothesen nicht getrennt weiterverfolgt, sondern nur die beste wird weiter berücksichtigt, da die anderen Hypothesen wegen der gleichen Fortsetzung am Ende des zu erkennenden Satzes keine bessere Gesamtbewertung ergeben können. Die dabei geprüften Bedingungen stellen sicher, daß wirklich nur solche Hypothesen kombiniert werden, die exakt die gleiche Fortsetzung ergeben. Dies stellt also eine Rekombination von Hypothesen in der grammatischen Ebene dar.

Es ist durchaus möglich, daß in einer Gruppe von Einträgen in der dritten Liste bei mehreren Einträgen die zweite Folge mit demselben Wort bzw. derselben Methode beginnt. In diesem Falle ist es nach einer weiteren Ausgestaltung der Erfindung zweckmäßig, daß ein Hinweis auf Referenzdaten in die zweite Liste nur aufgenommen wird, sofern darin kein Hinweis auf die Referenzdaten desselben Wortes und derselben Folgenummer mit kleinerem Bewertungswert bereits vorhanden ist, wobei im Falle eines solchen bereits vorhandenen Eintrags, jedoch mit größerem Bewertungswert, dieser gelöscht wird. Aus einer Gruppe braucht ein Wort bzw. eine Wortklasse nur einmal in die zweite Liste übetragen zu werden, da nach dem vollständigen Vergleich dieses Wortes alle Einträge der betreffenden Gruppe durchsucht werden, ob darin die zweite Folge mit diesem Wort beginnt. Wenn das Wort aus dem Eintrag mit dem kleinsten Bewertungswert in die zweite Liste übertragen wird, gibt dieser die bestmögliche Bewertung einer Wortfolge an, die zu dem in die zweite Liste übertragenen Wort geführt hat. Aus verschiedenen Gruppen dagegen wird das gleiche Wort stets erneut in die zweite Liste übertragen.

Bei einem für realistische Anwendung erforderlichen Umfang des Vokabulars ist jedoch auch die durch die Berücksichtigung der Grammatik verringerte Anzahl gleichzeitig zu vergleichender Wörter noch zu groß, so daß zur Beschleunigung des Verfahrens die Suche auf die erfolgversprechendsten Hypothesen konzentriert werden muß. Dies erfolgt nach einer Ausgestaltung der Erfindung dadurch, daß jeder neue und jeder erste und zweite weitere Eintrag nur vorgenommen wird, wenn dessen erster Bewertungswert kleiner ist als ein Schwellwert, der gleich dem um eine Konstante vergrößerten kleinsten Bewertungswert aller momentan in der zweiten Liste enthaltener Einträge ist. Es werden also nur solche Hypothesen weiterverfolgt, deren Bewertungswert nur um die Konstante von dem besten Bewertungswert für eine Hypothese abweicht. Durch dieses "Abschneiden" für wenig erfolgreichende Hypothesen kann der Zeitaufwand für die Erkennung eines Satzes drastisch gesenkt werden.

Dieses "Abschneiden" für ungünstige Hypothesen, d.h. auf der Ebene der Grammatik, kann in entsprechender Weise auch direkt auf den Vergleich der Wörter angewendet werden, und zwar vorzugsweise zusätzlich. Dafür wird nach einer weiteren Ausgestaltung der Erfindung in der zweiten Liste jeder Eintrag gelöscht, dessen erster Bewertungswert größer ist als der Schwellwert. Auf diese Weise wird der Umfang der zweiten Liste während des Vergleichs mit den aufeinanderfolgend eintreffenden Sprachwerten normalerweise ständig verringert, während sie andererseits beim Verfolgen der günstigeren Hypothesen aus der dritten Liste immer wieder ergänzt wird. Auf diese Weise bleibt der Umfang der zweiten Liste beschränkt, so daß der eigentliche Vergleichsvorgang schnell abläuft. Durch die Verwendung des ersten Bewertungswerts für den Schwellwert wird eine für beide Fälle einheitliche Bewertung erreicht.

Dieser Schwellwert kann jedoch erst bestimmt werden, wenn ein neuer Sprachwert mit den Referenzwerten aller in der zweiten Liste enthaltener Wörter verglichen worden ist, so daß zum Löschen von Einträgen in der zweiten Liste jeweils ein weiterer Durchgang erforderlich ist. Dieser weitere Durchgang kann nach einer weiteren Ausgestaltung der Erfindung dadurch gespart werden, daß für die Bestimmung des Schwellwerts als kleinster erster Bewertungswert der Einträge der zweiten Liste derjenige beim vorhergehenden Sprachwert verwendet wird. Weil dadurch jedoch ein etwas kleinerer minimaler erster Bewertungswert entsteht, wird die Konstante etwas erhöht, so daß damit wieder im wesentlichen der gleiche Schwellwert erhalten wird, wie er sich bei der Verwendung der letzten Einträge in der zweiten Liste ergeben würde. Der Wert der Konstanten ist ohnehin abhängig von den Anforderungen, die an das Sprachsystem gestellt werden. Wenn diese Konstante groß gewählt wird, werden viele Hypothsen verfolgt, so daß der Zeitaufwand für die gesamte Erkennung eines Satzes steigt, während bei einem kleineren Wert für die Konstante die richtige Hypothese bei manchen sehr ungünstig gesprochenen Sätzen verloren gehen kann, so daß dann keine richtige Erkennung mehr erfolgen würde.

Das Löschen der Wörter bzw. Einträge in der zweiten Liste erfolgt insbesondere dann, wenn das tatsächliche Wort entsprechend den momentanen Sprachwerten mit einem in der zweiten Liste enthaltenen Wort wenig Ähnlichkeit hat. Da der letzte Referenzwert des letzten bzw. eines sehr ähnlichen Wortes jedoch nicht nur einmal, sondern mit mehreren aufeinanderfolgenden Sprachwerten verglichen wird, da die Wortendung beispielsweise gedehnt gesprochen sein kann, würde ein solches Wort relativ lange in der zweiten Liste verbleiben. Da eine solche Dehnung jedoch nur begrenzt angenommen wird, ist es günstig, solche Ein träge entsprechend vollständig erkannten Wörtern möglichst bald zu löschen. Dies kann nach einer weiteren Ausgestaltung der Erfindung dadurch geschehen, daß in der zweiten Liste ein Wort gelöscht wird, wenn die Anzahl der Folgenummern, die zwischen der neuen Folgenummer und der beim Wort gespeicherten Folgenummer liegt, größer als ein bei den Referenzwerten für dieses Wort enthaltener Grenzwert ist. Auf diese Weise können gedehnte Endungen von Wörtern noch erfaßt werden, während andererseits solche Wörter den Erkennungsvorgang nicht sehr belasten bzw. verzögern.

Ein Eintrag in die zweite Liste erfolgt aus entsprechenden Einträgen der dritten Liste, nämlich wo die zweite Folge mit einem zu erkennenden Wort beginnt. Insbesondere bei einem umfangreichen Vokabular kann eine Hypothese mit einer Vielzahl verschiedener Wörter fortgesetzt werden, die alle der gleichen grammatischen Wortklasse angehören, z.B. alle Verben des Vokabulars. Für jedes einzelne Wort ist dann auch ein Eintrag in der dritten Liste vorhanden, so daß diese sehr umfangreich wird. Um insbesondere den Umfang der dritten Liste zu verringern, ist es nach einer weiteren Ausgestaltung der Erfindung zweckmäßig, daß die erste Liste Zuordnungen von vorgegebenen syntaktischen Kategorien zu anderen syntaktischen Kategorien und/oder Wortklassen anstelle Wörtern enthält und daß für alle Einträge der neuen Gruppe, bei denen die zweite Folge mit einer Wortklasse beginnt, ein Hinweis auf diese Wortklasse anstelle auf Referenzdaten eines Wortes in die zweite Liste aufgenommen wird. Aus der Wortklasse sind dann eindeutig und unmittelbar alle Wörter bestimmt, die in die zweite Liste einzutragen sind bzw. die mit den nächsten eintreffenden Sprachwerten verglichen werden müssen. Für alle derartigen Wörter enthält dann die dritte Liste nur jeweils einen einzigen Eintrag.

Auch der Umfang der zweiten Liste kann in ähnlicher Weise verringert werden, wenn nämlich in die zweite Liste nicht ein Hinweis auf jedes der zu erkennenden Wörter getrennt, sondern ebenfalls nur auf die Wortklasse aufgenommen wird. In diesem Falle ist es zweckmäßig, daß mit jedem Hinweis in der zweiten Liste eine Hilfsliste aufgerufen wird, die für jede Wortklasse die Hinweise auf die Referenzdaten der zu dieser Klasse gehörenden Wörter enthält, und diese Hinweise die entsprechenden Referenzwerte aus der weiteren Liste aufrufen. Die Hilfsliste kann ganz einfach aufgebaut sein, da sie lediglich nur die Zuordnung einer Wortklasse zu den einzelnen zugehörigen Wörtern enthält.

Für die Verwirklichung der Erkennung von Sprachsignalen sind Anordnungen mit einem Wandler zum Umsetzen eines gesprochenen Satzes in ein elektrisches Sprachsignal und zum Bilden von Sprachwerten, mit einem ersten Speicher, der Angaben über syntaktische Kategorien von natürlicher Sprache und deren Zuordnung zu weiteren syntaktischen Kategorien und/oder Angaben für Wörter bzw. Wortklassen enthält, mit einem weiteren Speicher für Referenzwerte, die aus früher gesprochenen Sätzen in entsprechender Weise wie die Sprachwerte gebildet sind, und mit einer Vergleichsanordnung, die an einem Ausgang des Wandlers und an einem Datenausgang des weiteren Speichers angeschlossen ist zum Liefern von Vergleichsergebnissen aus dem Vergleich von Sprachwerten mit Referenzwerten bekannt. Die Ausgestaltung einer derartigen Anordnung zur Durchführung des erfindungsgemäßen Verfahrens ist dadurch gekennzeichnet, daß ein zweiter Speicher, der die Einträge für die zweite Liste aufnimmt, und ein dritter Speicher vorgesehen sind, der die Einträge für die dritte Liste aufnimmt, wobei der Inhalt des zweiten Speichers mindestens einen Teil der Adressen des weiteren Speichers angibt, und daß eine Steuereinheit vorhanden ist, die eingerichtet ist, um den ersten, den zweiten und den dritten Speicher zu adressieren und Daten in den zweiten und den dritten Speicher einzuschreiben und aus diesen sowie aus dem ersten Speicher auszulesen und bei Empfang eines Wortendesignals für mindestens ein Wort die neuen, die ersten und die zweiten weiteren Einträge für den dritten Speicher und danach die Einträge für den zweiten Speicher zu bilden und in diese einzuschreiben und nach Verarbeitung des letzten Sprachsignals die im dritten Speicher enthaltene vollständige Wortkette mit dem geringsten Bewertungswert an eine Ausgabeeinheit auszugeben. Dabei ist es besonders zweckmäßig, daß die Steuereinheit ein Prozessor, insbesondere ein prgrammierter Microprozessor ist. Sofern die dritte Liste Hinweise auf Wortklassen anstatt der Wörter selbst enthält, ist es ferner zweckmäßig, daß der Ausgang des zweiten Speichers mit dem Adresseneingang eines Hilfsspeichers gekoppelt ist, dessen Ausgang mit einem Teiladresseneingang des weiteren Speichers gekoppelt ist.

Ausführungsbeispiele der Erfindung werden nachstehend anhand der Zeichnung näher erläutert. Es zeigen
- Fig. 1: einen schematischen Überblick über die Zweistufigkeit des erfindungsgemäßen Verfahrens,
- Fig. 2: ein Flußdiagramm zur Verdeutlichung des Verfahrens,
- Fig. 3: den grundsätzlichen Aufbau der Einträge in der dritten Liste,
- Fig. 4: die Ermittlung einer Folge von Wörtern bzw. syntaktischen Kategorien aus einer eingehenden Folge von Sprachwerten.
- Fig. 5: ein schematisches Blockschaltbild zur Durchführung des erfindungsgemäßen Verfahrens.

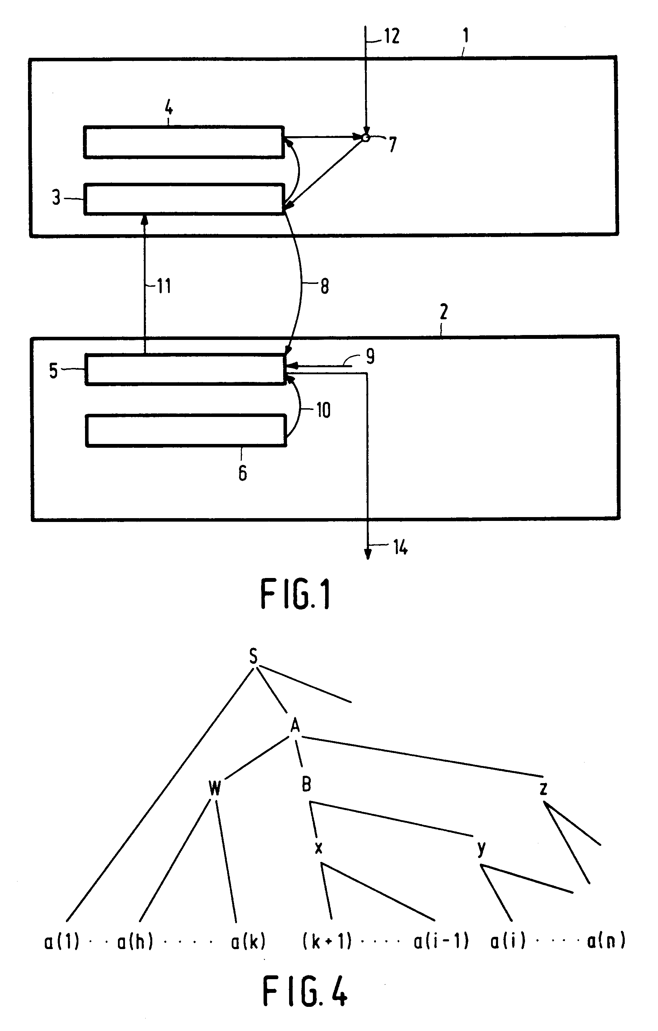

Die Fig. 1 zeigt ein schematisches Diagramm, aus der die zwei Abschnitte deutlicher hervorgehen, in die das Verfahren unterteilt werden kann. Im Abschnitt 1 findet der eigentliche Vergleich der Sprachwerte, die über den Eingang 12 zugeführt werden, mit Referenzwerten statt. Die Vergleichsergebnisse für vollständig verglichene Wörter werden über den Weg 8 dem Abschnitt 2 zugeführt, wo diese Wörter einerseits gespeichert werden und andererseits die Vergleichsergebnisse dieser jeweils vollständig erkannten Wörter zusammen mit den grammatischen Regeln dafür verwendet werden, neue Wörter zu ermitteln, die aufgrund dieser grammatischen Regeln als nächstes folgen können, und diese neuen Wörter werden über den Weg 11 dem Abschnitt 1 zugeführt, um daraus die Referenzwerte zu ermitteln bzw. zu vervollständigen, mit denen die folgenden, über den Eingang 12 zugeführten Sprachwerte verglichen werden müssen. Auf diese Weise wechselt das Verfahren ständig zwischen den Abschnitten 1 und 2, bis der letzte Sprachwert verglichen ist. Danach wird dann über den Ausgang 14 die Wortfolge ausgegeben, die die beste Übereinstimmung mit der Folge der Sprachwerte gezeigt hat und die außerdem den gespeicherten grammatischen Regeln entspricht.

Die über den Eingang 12 zugeführten Sprachwerte können beispielsweise Kurzzeitspektren sein, die aus dem Sprachsignal in 10 ms Abstand gewonnen werden, es können jedoch auch bereits weiter verarbeitete Werte sein, z.B. Phoneme oder Diphone. Die Ermittlung der über den Eingang 12 zugeführten Sprachwerte aus dem Sprachsignal ist hier nicht weiter dargestellt, da diese in üblicher Weise erfolgt und die Einzelheiten davon für die Erfindung nicht von Bedeutung sind.

Die Referenzwerte, mit denen die Sprachwerte verglichen werden, sind auf die gleiche Weise wie die zugeführten Sprachwerte aus Sprachsignalen vorher gesprochener Sätze gewonnen, und sie sind in einem Speicher bzw. Speicherbereich 4 abgespeichert. Der eigentliche Vergleich ist durch den Kreis 7 symbolisiert, und er kann beispielsweise auf eine Weise durchgeführt werden, die aus der DE-OS 32 15 868 bekannt ist. Damit können insbesondere unterschiedliche Sprechgeschwindigkeiten berücksichtigt werden.

Die Referenzwerte werden gemäß einer Liste, die im folgenden als zweite Liste bezeichnet wird und die in einem Speicher bzw. Speicherbereich 3 gespeichert ist, ausgewählt. Diese zweite Liste enthält Hinweise auf Wörter in kodierter Form, die, wie vorher beschrieben, in Abschnitt 2 des Verfahrens ermittelt worden sind und angeben, welche Wörter die über den Eingang 12 eintreffenden Sprachwerte aufgrund der grammatischen Regeln darstellen können. Jedem Wort ist im übrigen eine zeitliche Folge von Referenzwerten zugeordnet, deren zeitlich aufeinanderfolgende Verarbeitung nicht näher dargestellt ist bzw. in dem Vergleichsvorgang 7 enthalten ist. Das Vergleichsergebnis aus dem Vergleichsvorgang 7 wird wieder in der zweiten Liste 3 gespeichert. Wie später noch näher erläutert wird, sind jeweils mehrere Wörter "aktiv", d.h. die zugehörenden Referenzwerte werden mit jedem ankommenden Sprachwert verglichen, und die Liste im Speicher 3 enthält außer dem kodierten Wort auch noch weitere Angaben. Da die verschiedenen Wörter aber meist unterschiedlich lang sind, d.h. eine unterschiedliche Anzahl von Referenzwerten enthalten, und da andererseits verschiedene Wörter häufig zu verschiedenen Zeitpunkten begonnen werden, kann der Vergleich eines Wortes mit den eintreffenden Sprachwerten vollständig abgeschlossen sein, d.h. der letzte Referenzwert des Wortes ist mit einem Sprachwert verglichen worden, während von anderen Wörtern der Anfang oder der mittlere Bereich verglichen wird.

Wenn also ein Wort vollständig verglichen worden ist, wird es zusammen mit den weiteren, noch zu erläuternden Angaben über den Weg 8, der einen Schritt im Verfahren darstellt, dem Abschnitt 2 zugeführt und dient dort zur Veränderung einer Liste, die im folgenden als dritte Liste bezeichnet wird und in einem Speicher bzw. Speicherbereich 5 gespeichert ist. Diese dritte Liste wird noch durch weitere Verfahrensschritte geändert, die durch die Pfeile 9 und 10 angedeutet sind, wobei der Pfeil 10 die Berücksichtigung einer Liste, die im folgenden als erste Liste bezeichnet ist und in einem Speicher bzw. Speicherbereich 6 gespeichert ist, angibt. Diese Liste ist so aufgebaut, daß dadurch die grammatischen Sprachregeln bei der Ermittlung der grammatisch zulässigen nächsten zu vergleichenden Wörter berücksichtigt werden. Der Pfeil 9 deutet Änderungen in der dritten Liste in Form zusätzlicher Einträge an, die nur aufgrund vorhandener Einträge der dritten Liste gebildet werden.

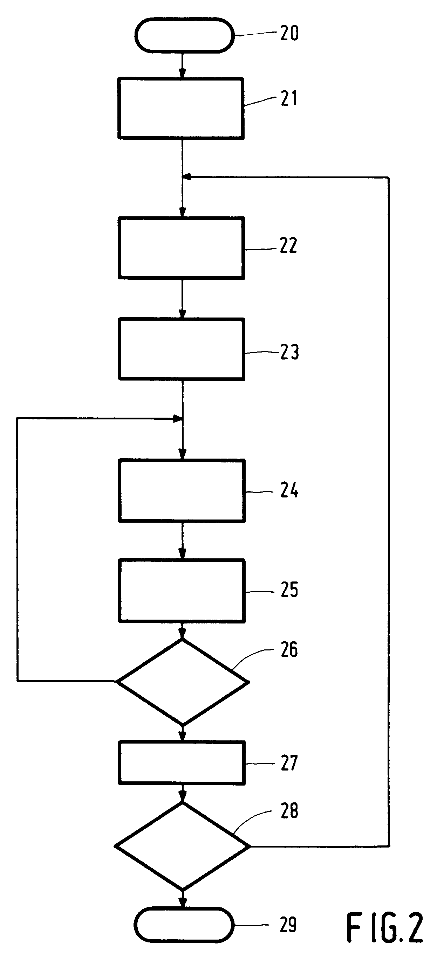

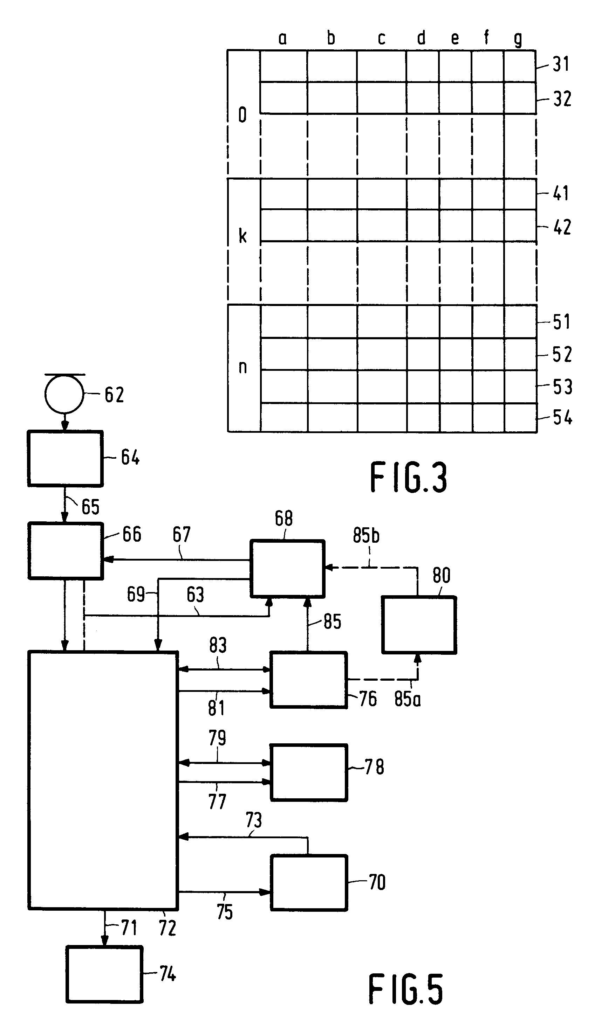

Der Ablauf des gesamten Verfahrens soll nachfolgend anhand des in Fig. 2 schematisch dargestellten Flußdiagramms näher erläutert werden. Dafür ist der Aufbau der dritten Liste im Speicher 5 von Bedeutung, der in Fig. 3 näher angegeben ist. Diese dritte Liste ist in eine Anzahl Gruppen von Einträgen unterteilt, von denen bei der ersten Gruppe mit der Folgenummer 0 Einträge 31 und 32, bei der nächsten Gruppe mit der Folgenummer k Einträge 41 und 42 und bei der letzten Gruppe mit der Folgenummer n Einträge 51 bis 54 angegeben sind. Jeder Eintrag ist in eine Anzahl Abschnitte a bis g unterteilt, die quasi Spalten über die zeilenweisen Einträge in der Liste bilden. Die Folgenummern sind bei jeder Gruppe der Übersichtlichkeit halber nur einmal angegeben. Sie ist jedoch tatsächlich in jedem Eintrag in einem entsprechenden Abschnitt enthalten. Diese dritte Liste in Fig. 3 wird erst bei der Ausführung des Verfahrens mit den nacheinander eintreffenden Sprachwerten erzeugt bzw. ausgefüllt, d.h. zunächst ist die Liste gar nicht vorhanden bzw. leer. Die Anzahl der Einträge pro Gruppe der dritten Liste ist dabei nicht festgelegt, sondern ergibt sich aufgrund des Ablaufs des Verfahrens anhand der eintreffenden Sprachwerte.

In Fig. 2 stellt das Symbol 20 das allgemeine Startsymbol dar. Im Block 21 wird vor dem Eintreffen des ersten Sprachwerts die Gruppe 0 der Einträge in der dritten Liste in Fig. 3 erzeugt, und zwar anhand der ersten Liste, die die Zuordnung syntaktischer Kategorien verschiedener Ordnung zueinander und zu Wörtern enthält. Eine syntaktische Kategorie ist insbesondere ein Satzteil, z.B. das Objekt, das aus einem Nebensatz, aus einem Substantiv mit oder ohne Adjektiven, einem Fürwort oder aus einem leeren Satzteil bestehen kann, d.h. gar nicht vorhanden sein kann. Für jede dieser Möglichkeiten ist für die syntaktische Kategorie "Objekt" eine Zeile in der ersten Liste vorhanden. Dabei stellen die einzelnen Möglichkeiten wiederum zumindest zum Teil syntaktische Kategorien dar, für die es in der Grammatik ebenfalls verschiedene Möglichkeiten gibt, d.h. mehrere Zeilen in der ersten Liste, usw.

Die erste Liste mit den syntaktischen Kategorien und deren Zuordnung untereinander und zu Wörtern ist für das Verfahren vorgegeben und bestimmt, welche Sätze mit welchen grammatischen Strukturen erkannt werden können. Diese Liste liegt bei Beginn des Verfahrens also bereits vor und wird nicht mehr verändert.

In jeder Grammatik, auch bei sehr eingeschränkter Grammatik für lediglich einfache Sätze, ist jedoch eine syntaktische Kategorie stets vorhanden, nämlich eine Anfangs-Kategorie, die jeden erkennbaren Satz umfaßt und für die die erste Liste eine oder allgemein mehrere Zuordnungen zu anderen syntaktischen Kategorien enthält, die quasi die gröbste Einteilung eines Satzes darstellen. Diese gröbsten syntaktischen Kategorien enthalten wiederum weitere Zuordnungen in der ersten Liste, usw., bis schließlich jede Zuordnungskette in zu erkennende Wörter mündet. Eine vorteilhafte Zwischenlösung besteht im übrigen darin, die Ketten von Zuordnungen nicht in die zu erkennenden Wörter selbst, sondern in Wortklassen enden zu lassen, wie beispielsweise Substantive, Verben usw.. Dies verringert den Umfang der ersten Liste und der dritten Liste, ggf. auch der zweiten Liste ganz erheblich. Dies wird bei der weiteren Erläuterung des Verfahrens noch deutlicher. Erst beim Übergang 11 von der zweiten Verfahrensstufe zur ersten, d.h. beim Übergeben der nächsten zu erkennenden Wörter, wird dann die betreffende Wortklasse in die einzelnen Wörter aufgelöst. Dabei kann in die zweite Liste jedes Wort der betreffenden Wortklasse eingetragen werden, oder auch in die zweite Liste wird lediglich die Wortklasse eingetragen, und aus dieser Wortklasse werden dann beispielsweise über einen Hilfsspeicher die Referenzwerte der zugehörigen einzelnen Wörter aufgerufen.

Bei dem ersten Verarbeitungsblock 21 des Flußdiagramms in Fig. 2 werden also die Einträge für die Gruppe 0 in der dritten Liste der Fig. 3 erzeugt. Für die Folgenummer der einzelnen Gruppen kann eine beliebige Nummer gewählt werden, jedoch ist es zweckmäßig, diese in der natürlichen Zahlenfolge beginnend und weiterzählend zu wählen, so daß hier die Folgenummer 0 gewählt ist.

Die einzelnen Abschnitte jedes Eintrags der dritten Liste haben nun folgende Bedeutung.
- a: Dies ist ein Hinweis auf eine syntaktische Kategorie der ersten Liste, d.h. zweckmäßig die Adresse derjenigen Zeile der ersten Liste, in der eine syntaktische Kategorie zum ersten Mal auftritt. Da häufig alle Zuordnungen zu einer syntaktischen Kategorie nacheinander benötigt werden, sind diese in der ersten Liste nacheinander angeordnet, so daß von der ersten Zeile für die Zuordnungen jeweilseiner syntaktischenKategorie ausgehend fortgezählt werden kann.
- b: Dieser Abschnitt enthält eine Angabe für eine Folge von bereits verglichenen Wörtern und/oder syntaktischen Kategorien, wobei diese Folge außerdem bereits daraufhin überprüft ist, daß sie mit den grammatischen Regeln gemäß der ersten Liste übereinstimmt. Dies ist automatisch dadurch gewährleistet, daß die im Abschnitt b angegebene Folge einen Teil der Zuordnung zur syntaktischen Kategorie darstellt, die im Abschnitt a angegeben ist.
- c: Dieser Abschnitt enthält eine Angabe für eine Folge von Wörtern und/oder syntaktischen Kategorien, die den Rest der Zuordnung der syntaktischen Kategorie im Abschnitt a darstellt und somit eine Folge möglicherweise noch im folgenden Sprachsignal zu erwartender Wörter oder Kategorien angibt.
- d: Dieser Abschnitt enthält eine weitere Folgenummer einer Gruppe, und zwar entweder der momentanen Gruppe oder einer frühereren Gruppe, abhängig davon, wie der betreffende Eintrag der dritte Liste gebildet ist. Dies wird aus der weiteren Beschreibung des Verfahrens deutlicher.
- e: Dieser Abschnitt enthält einen Bewertungswert, der die Gesamtsumme aller Vergleichssummen zwischen allen bisher eingetroffenen Sprachwerten und der gesamten Folge von Referenzwerten angibt, die zu der Hypothese gehören, von der die im Abschnitt a angegebene syntaktische Kategorie zumindest einen Teil darstellt.
- f: Dieser Abschnitt enthält einen Bewertungswert, der erreicht worden war, als die syntaktische Kategorie gemäß Abschnitt a begonnen wurde.
- g: Dieser Abschnitt enthält eine Folge von verglichenen Wörtern, die der im Abschnitt b angegebenen Folge entspricht. Da im Abschnitt b jedoch auch bereits zum Teil oder vollständig nur syntaktische Kategorien angegeben sein können, die also jeweils mehrere Wörter bzw. genauer gesagt mehrere Wortarten zusammenfassen, müssen die einzelnen erkannten Wörter in der richtigen Folge gesondert festgehalten werden, was in diesem Abschnitt geschieht.

In der Gruppe 0 werden nun in den Einträgen 31, 32 usw. zunächst die Zuordnungen zur Anfangs-Kategorie in der ersten Liste eingetragen. Dabei enthält also der Abschnitt a den Hinweis auf diese Anfangs-Kategorie, z.B. auf die erste Zeile in der ersten Liste, der Abschnitt b eine leere Folge, da ja noch keine Vergleiche vorgenommen worden sind, während der Abschnitt c die der Anfangs-Kategorie zugeordneten weiteren syntaktischen Kategorien enthält. Der Abschnitt d enthält die Folgenummer der ersten Gruppe, d.h. 0. Die Abschnitte e und f enthalten einen Anfangswert, zweckmäßigerweise den Wert 0. Im Abschnitt g ist ebenfalls noch nichts bzw. lediglich eine leere Folge enthalten.

Wenn auf diese Weise alle Zuordnungen zur Anfangs-Kategorie zu Einträgen verarbeitet worden sind, wird für jeden Eintrag die erste syntaktische Kategorie des Abschnitts c geprüft, ob dafür eine Zuordnung zu weiteren Kategorien bzw. Wörtern vorhanden sind, und für jede derartige Zuordnung wird ein weiterer Eintrag in der Gruppe 0 vorgenommen, wo der Abschnitt a des neuen Eintrags die erste Kategorie des Abschnitts c des alten Eintrags, der Abschnitt c die zugeordnete Folge von syntaktischen Kategorien oder Wörtern oder einer Mischung davon enthalten, während die Abschnitte b und d bis g dieselben Werte wie beim ersten Eintrag enthalten. In diesen ergänzten Einträgen werden ebenfalls wieder die Abschnitte c geprüft, ob darin eine Folge enthalten ist, die mit einer syntaktischen Kategorie beginnt, usw., bis schließlich nur noch Einträge ergänzt worden sind, von denen jeder in der im Abschnitt c angegebenen Folge mit einem zu erkennenden Wort beginnt, nämlich mit einem der ersten möglichen Wörter aller erkennbarer Sätze. Da die Wörter am Anfang eines Satzes aufgrund der Grammatik jedoch alle zu einer oder wenigen verschiedenen Klassen von Wörtern gehören, ebenso wie die möglichen Wörter an den weiteren Stellen innerhalb des Satzes, ist es zweckmäßig, in den Einträgen in der dritten Liste in den Abschnitten b und c nur die Wortklassen anzugeben. Dies verringert den Umfang der dritten Liste ganz erheblich, wie unmittelbar einzusehen ist.

Für dieses jeweils erste Wort bzw. Wortklasse ist nun keine weitere Zuordnung mehr vorhanden, jedoch muß dieses jeweils erste Wort bzw. Wortklasse im Abschnitt c der betreffenden Einträge in die zweite Liste übertragen werden, so daß der erste Sprachwert mit den Referenzwerten der zulässigen ersten Wörter eines Satzes verglichen werden können. Ferner wird in diese zweite Liste der im Abschnitt e enthaltene erste Bewertungswert, d.h. üblicherweise 0, sowie die zugehörige Folgenummer der Gruppe, d.h. in diesem Fall ebenfalls den Wert 0, übertragen. Dies ist der Anfangszustand der zweiten Liste, die jedoch beim Ablauf des Verfahrens häufig geändert wird.

Nachdem nun auf diese Weise die zweite Liste mit den zu vergleichenden Wörtern und die dritte Liste mit der ersten Gruppe angelegt worden sind, kann im Block 22 in Fig. 2 der erste Sprachwert mit Referenzwerten verglichen werden. Das Vergleichsergebnis stellt ein Maß für die Übereinstimmung bzw. einen Abstandswert zwischen dem ersten Sprachwert und den entsprechenden Referenzwerten dar, und entsprechend gilt dies auch für die folgenden Sprachwerte. Jeder neu bestimmte Abstandswert wird in an sich bekannter Weise zu der minimalen, bis dahin ermittelten Vergleichssumme addiert. Dies geschieht beim fortschreitenden Verlauf des Sprachsignals mit mehreren, zeitlich aufeinanderfolgenden Referenzwerten desselben Wortes entsprechend dem Prinzip der dynamischen Programmierung, wie dies beispielsweise in der bereits genannten DE-OS 32 15 868 beschrieben ist, um insbesondere unterschiedliche Sprachgeschwindigkeiten ausgleichen zu können, bis schließlich der letzte Referenzwert eines Wortes verglichen worden ist, genauer gesagt, zum ersten Mal verglichen worden ist, da der bzw. die nächsten folgenden Sprachwerte ebenfalls noch mit dem letzten Referenzwert verglichen werden. Bei jedem neuen Sprachwert ist im übrigen die Folgenummer erhöht worden, jedoch wird erst eine neue Gruppe mit Einträgen für eine Folgenummer vorgenommen, wenn der zugehörende Sprachwert wie erwähnt mit dem letzten Referenzwert eines Wortes verglichen worden ist. Statt dessen kann eine Veränderung der Folgenummer nur bei jedem derartigen Wortende erfolgen.

Dies erfolgt im Block 23 in Fig. 2. Dabei wird aus einem solchen vollständig verglichenen Wort sowie aus der bei diesem Wort bzw. der zugehörigen Wortklasse in der zweiten Liste gespeicherten Folgenummer und dem dabei gespeicherten Bewertungswert, der um die Vergleichssumme dieses Wortes erhöht ist, ein neuer Eintrag in die dritte Liste vorgenommen. Dafür wird in der Gruppe, deren Folgenummer bei dem vollständig verglichenen Wort bzw. der zugehörigen Wortklasse in der zweiten Liste gespeichert ist, in der dritten Liste zumindest der Abschnitt c jedes Eintrags ausgelesen und geprüft, ob die darin enthaltene Folge mit diesem soeben vollständig verglichenen Wort bzw. der zugehörigen Wortklasse beginnt. Mindestens ein solcher Eintrag muß in jedem Falle vorhanden sein, denn nur aus einem solchen Eintrag der dritten Liste kann das erkannte Wort bzw. die dazugehörige Wortklasse in der zweiten Liste gekommen sein. Für jeden derartigen Eintrag wird für die Gruppe mit der momentanen Folgenummer in der dritten Liste ein neuer Eintrag erzeugt, der im Abschnitt a den gleichen Hinweis auf die syntaktische Kategorie wie der ausgelesene Eintrag enthält, im Abschnitt b die um das vollständig verglichene Wort bzw. die zugehörige Wortklasse verlängerte Folge enthält, im Abschnitt c die entsprechend verkürzte Folge, im Abschnitt d die gleiche Folgenummer wie im Abschnitt d des ausgelesenen Eintrags und im Abschnitt e einen Bewertungswert gleich der Summe des ersten Bewertungswerts aus dem ausgelesenen Eintrag und der für das betreffende Wort erreichten Vergleichssumme, während der zweite Bewertungswert des ausgelesenen Eintrags übernommen wird, und im Abschnitt g wird die darin enthaltene Folge um das vollständig verglichene Wort ergänzt, und zwar wirklich nur das verglichene Wort, nicht die Wortklassen. Bei dem ersten vollständig verglichenen Wort nach dem Anfang wirken einige dieser Werte des neuen Eintrags eher trivial, jedoch im weiteren Verlaufe des Verfahrens hat die Ableitung der einzelnen Abschnitte jedes neuen Eintrags eine erhebliche Bedeutung.

Bevor ein derartiger neuer Eintrag in die momentane Gruppe der dritten Liste eingetragen wird, wird jedoch noch geprüft, ob der für den Abschnitt e ermittelte Bewertungswert kleiner ist als ein Schwellwert. Dieser Schwellwert wird aus den Bewertungswerten aller momentan in der zweiten Liste enthaltener Einträge ermittelt, indem der kleinste dieser Bewertungswerte aufgesucht und um eine feste Konstante vergrößert wird. Wie früher bereits erwähnt, ist in der zweiten Liste bei jedem Wort bzw. bei jeder Wortklasse der jeweils kleinste Bewertungswert, d.h. die bestmögliche Bewertung für eine Folge von Wörtern festgehalten, die zu dem betreffenden Wort bzw. der Wortklasse führte. Bei der Fortsetzung der Hypothesen, die im Moment über einen entsprechenden Eintrag in der dritten Liste aktiv sind, ist es zwar möglich, daß eine Hypothese, die im Moment nicht den günstigsten Bewertungswert hat, bei der weiteren Fortsetzung sich als günstiger erweist als andere Hypothesen, d.h. eine geringere Zunahme des Bewertungswertes aufweist, jedoch wird angenommen, daß diese Verbesserung nur begrenzt ist. Diese begrenzte Verbesserung wird durch die Konstante bei der Bestimmung des Schwellwerts berücksichtigt. Wenn also ein neuer Eintrag einen ersten Bewertungswert hat, der über diesen Schwellwert liegt, wird angenommen, daß diese Hypothese auch bei einer günstigen Fortsetzung dann nicht mehr zu einer Wortfolge mit kleinster Gesamtbewertung führen kann. Der Wert der Konstanten stellt somit einen Kompromiß dar, denn wenn diese zu klein gewählt wird, kann es geschehen, daß die günstigste Wortfolge dadurch verloren wird, daß sie vorübergehend ungünstiger ist als andere, während eine zu große Konstante dazu führt, daß zu viele Hypothesen weiterverfolgt werden, wodurch der Verarbei tungsaufwand bei der Erkennung des Sprachsignals erheblich wächst. Außerdem wird im letzteren Falle die Möglichkeit einer Falscherkennung vergrößert. Insgesamt wird aber auch bei einem relativ hohen Wert der Konstanten, d.h. bei einer hohen Schwelle noch eine wesentliche Verringerung der Verarbeitungszeit erreicht gegenüber dem Fall, wenn keine Schwelle berücksichtigt wird.

Die gleiche Schwelle wird im übrigen auch bei dem Vergleich der Sprachwerte mit den durch die Einträge der zweiten Liste angegebenen Referenzwerte verwendet. Bei der Mehrzahl der Hypothesen kann nämlich aufgrund der Grammatik die Fortsetzung mit verschiedenen Wörtern erfolgen, was besonders deutlich wird, wenn in der zweiten Liste Wortklassen anstelle der Wörter eingetragen sind. Diese möglichen Wörter unterscheiden sich in den meisten Fällen wesentlich, so daß bei diesen Wörtern schon nach einem Vergleich erst eines Teils der Referenzdaten dieses Wortes zu erkennen ist, daß es mit dem im Sprachsignal enthaltenen Wort zu wenig übereinstimmt. Dies ist daran zu erkennen, daß für solche Wörter die Summe aus dem zugehörigen Bewertungswert aus der zweiten Liste und den Vergleichsergebnissen stark ansteigt. Wenn derartige Wörter nicht mehr berücksichtigt werden, sobald diese Summe den Schwellwert überschreitet, in dem dann dieses Wort im zweiten Speicher gelöscht wird oder, wenn im zweiten Speicher Wortklassen gespeichert sind, die Zuordnung dieser schlecht übereinstimmenden Wörter zu der betreffenden Wortklasse nicht mehr berücksichtigt wird, kann ebenfalls erhebliche Verarbeitungszeit eingespart werden.

Ein weiterer Grund, in der zweiten Liste ein Wort zu löschen oder die Zuordnung eines Wortes zu einer Wortklasse im zweiten Speicher nicht mehr zu berücksichtigen, ergibt sich dadurch, daß, wie früher erwähnt, mit dem letzten Referenzwert eines Wortes mehrere aufeinanderfolgende Sprachwerte verglichen werden, um eine gedehnte Aussprache am Wortende zu berücksichtigen. Zwar wird, wenn das entsprechende Wort im Sprachsignal nicht gedehnt gesprochen wurde, die Vergleichssumme beim Vergleich des letzten Referenzwertes mit weiteren aufeinanderfolgenden Sprachsignalen schnell größer, so daß die Summe aus Bewertungswert und Vergleichssumme den Schwellwert überschreitet, jedoch kann die Anzahl der aufeinanderfolgenden Sprachwerte, die mit dem letzten Referenzwert verglichen werden, dadurch verkleinert werden, daß nur eine gegebenenfalls wortabhängig vorgegebene Anzahl aufeinanderfolgender Vergleiche vorgenommen und danach das betreffende Wort im zweiten Speicher gelöscht wird. Dadurch kann weiter unnötige Verarbeitungszeit eingespart werden.

Wenn gleichzeitig, d.h. bei einem bestimmten Sprachwert, der letzte Referenzwert mehrerer Wörter verglichen worden ist, wird dieser Verfahrensschritt für jedes Wort getrennt durchgeführt. Wenn auf diese Weise für das vollständig verglichene Wort bzw. alle vollständig verglichenen Wörter die entsprechenden neuen Einträge in der dritten Liste vorgenommen worden sind, werden diese einzelnen neuen Einträge daraufhin geprüft, ob der Abschnitt c mit einer syntaktischen Kategorie beginnt. Dies erfolgt im Block 24 im Flußdiagramm nach Fig. 2. Wenn dabei ein Eintrag festgestellt wird, bei dem der Abschnitt c diese Bedingung erfüllt, werden bei der Gruppe mit der momentanen Folgenummer erste weitere Einträge angefügt, die im Abschnitt a den Hinweis auf die syntaktische Kategorie des Abschnitts c des geprüften Eintrags, im Abschnitt b eine leere Folge, im Abschnitt c die dieser Kategorie zugeordnete Folge von weiteren syntaktischen Kategorien und/oder Wörtern bzw. Wortklassen, im Abschnitt d die momentane Folgenumme, in den Abschnitten e und f den ersten Bewertungswert aus dem Abschnitt e des geprüften Eintrags und im Abschnitt g eine leere Folge enthalten. Bevor dieser bzw. jeder erste Eintrag jedoch tatsächlich vorgenommen wird, wird noch geprüft, ob nicht bereits ein Eintrag in der momentanen Gruppe vorhanden ist, dessen Angaben in den Abschnitten a bis d mit dem vorzunehmenden Eintrag vollständig übereinstimmen. Wenn ein solcher Eintrag in der momentanen Gruppe wirklich bereits vorhanden ist, wird geprüft, ob der erste Bewertungswert größer als der des vorzunehmenden Eintrags ist. Wenn dies der Fall ist, wird der vorhandene Eintrag durch den vorzunehmenden Eintrag ersetzt, und im anderen Falle wird der neu abgeleitete erste weitere Eintrag nicht vorgenommen. Durch den Vergleich der Angaben in den Abschnitten a bis d wird sichergestellt, daß auf diese Weise zwei Hypothesen rekombiniert werden, die zwar allgemein von verschiedenen Stellen ausgegangen und verschiedene Wege durchlaufen haben, nunmehr aber die exakt gleiche Fortsetzung finden sollen. In diesem Falle wird also nur die Hypothse mit dem bisher günstigsten Bewertungswert weiterverfolgt, da eine andere Hypothese auch später keinen besseren Bewertungswert mehr erlangen kann. Ein Vergleich des ersten Bewertungswerts von jedem dieser ersten weiteren Einträge mit dem Schwellwert ist nicht nicht erforderlich, da diese ersten weiteren Einträge keinen höheren Bewertungswert als die bereits vorhandenen Einträge haben können.

Wenn dies für alle in Frage kommenden neuen Einträge der Gruppe mit der momentanen Folgenummer durchgeführt ist, wird entsprechend Block 25 im Flußdiagramm nach Fig. 2 geprüft, ob in dieser Gruppe ein Eintrag vorhanden ist, bei dem der Abschnitt c eine leere Folge enthält, wo also die derjenigen Kategorie, die im Abschnitt a angegeben ist, zugeordnete Folge vollständig verglichen worden ist.

Bei einem solchen Eintrag wird in der Gruppe, deren Folgenummer in diesem Eintrag der momentanen Gruppe im Abschnitt d angegeben ist, derjenige frühere Eintrag aufgesucht, bei dem der Abschnitt c mit derjenigen syntaktischen Kategorie beginnt, die im Abschnitt a des betreffenden Eintrags der momentanen Gruppe angegeben ist. Aus dem früheren Eintrag wird nun ein zweiter weiterer Eintrag für die momentane Gruppe abgeleitet, der im Abschnitt a die syntaktische Kategorie im Abschnitt a des früheren Eintrags, im Abschnitt b die um die syntaktische Kategorie des betreffenden Eintrags der momentanen Gruppe verlängerte Folge, im Abschnitt c die entsprechend verkürzte Folge, im Abschnitt d die Folgenummer des früheren Eintrags, im Abschnitt e die Summe aus dem ersten Bewertungswert des früheren Eintrags und der Differenz der beiden Bewertungswerte des betreffenden Eintrags der momentanen Gruppe, im Abschnitt f den entsprechenden Bewertungswert des früheren Eintrags und im Abschnitt g die Kette der Wortfolgen aus beiden Einträgen enthält. Auf diese Weise werden die Hypothesen für ältere, übergeordnete syntaktische Kategorien immer weitergehend verifiziert. Bevor dieser zweite weitere Eintrag in die dritte Liste tatsächlich vorgenommen wird, kann noch in entsprechender Weise wie früher beschrieben geprüft werden, ob der durch Summenbildung entstandene erste Bewertungswert nicht größer als der Schwellwert geworden ist.

Auf diese Weise werden alle Einträge der momentanen Gruppe verarbeitet. Dabei können nun Einträge entstehen, bei denen der Abschnitt c eine leere Folge enthält, so daß erneut der vorhergehende Verfahrensschritt für alle Einträge der momentanen Gruppe durchgeführt wird, bei dem also neue Kategorien aufgenommen werden, und danach wird wieder die Verifizierung der älteren Hypothesen fortgesetzt usw., bis keine neue syntaktische Kategorie mehr aufgenommen worden ist. Dies wird durch die Entscheidungsraute 26 in dem Flußdiagramm in Fig. 2 angedeutet, die also die Schleife durch die Blöcke 24 und 25 so lange durchlaufen läßt, bis kein neuer Eintrag mehr erfolgt, und dann wird zum Block 27 übergegangen. Darin werden wieder alle Einträge der momentane Gruppe der dritten Liste durchlaufen, jedoch wird nun geprüft, ob ein Eintrag im Abschnitt c vorhanden ist, dessen zugehörige Folge mit einem Wort bzw. einer Wortklasse beginnt. Falls ein solcher Eintrag gefunden wird, wird dieses Wort bzw. Wortklasse zusammen mit dem ersten Bewertungswert dieses Eintrags und der Folgenummer der momentanen Gruppe in die zweite Liste übertragen.

Vor dem Übertragen in die zweite Liste wird jedoch geprüft, ob darin nicht bereits ein Eintrag mit demselben Wort bzw. derselben Wortklasse und derselben Folgenummer vorhanden ist. Wenn ein solcher Eintrag gefunden wird, wird geprüft, ob der vorhandene Eintrag einen größeren Bewertungswert als der vorzunehmende Eintrag hat. Wenn dies der Fall ist, wird der vorhandene Eintrag durch den vorzunehmenden Eintrag ersetzt, anderenfalls erfolgt kein neuer Eintrag in die zweite Liste. Auf diese Weise enthält die zweite Liste stets nur den Eintrag eines bestimmten Wortes mit dem kleinsten Bewertungswert jeweils einer Folgenummer, was für die vorher angegebene Bestimmung des Schwellwertes von Bedeutung ist.

In der Raute 28 wird geprüft, ob der letzte Sprachwert eingegangen ist. Wenn dies nicht der Fall ist, wird wieder zum Block 22 zurückgegangen und der nächste Sprachwert in beschriebener Weise verarbeitet. Wenn jedoch der letzte Sprachwert erreicht wird, wird zum Block 29 gegangen, bei dem die letzte Gruppe der dritten Liste auf Einträge durchsucht wird, die im Abschnitt a die Anfangskategorie enthalten, im Abschnitt c eine leere Folge und im Abschnitt d die Folgenummer der ersten Gruppe enthält als Zeichen, daß ein grammatisch vollständiger Satz verglichen worden ist, und wenn mehrere derartige Einträge vorhanden sind, wird derjenige Eintrag verwendet, der im Abschnitt e den kleinsten ersten Bewertungswert hat, und aus diesem Eintrag wird die Wortfolge im Abschnitt g ausgelesen, die den mit größter Wahrscheinlichkeit erkannten Satz darstellt. Damit ist das Verfahren abgeschlossen.

In Fig. 4 ist angedeutet, wie mit den Zuordnungen während des Verfahrens neue Hypothesen entwickelt und alte Hypothesen abgeschlossen werden. Zur Anfangs-Kategorie, die hier mit S bezeichnet ist, ist eine Folge von syntaktischen Kategorien zugeordnet, von denen eine mit A bezeichnet ist. Diese syntaktische Kategorie A zerfällt nun wiederum in eine Folge eines Wortes w, einer weiteren syntaktischen Kategorie B und eines weiteren Wortes z. Der syntaktischen Kategorie B ist nun wieder die Folge der Wörter x und y zugeordnet. Die ersten Sprachwerte a(1) und folgende sind über einen entsprechenden Baum bereits der Anfangs-Kategorie zugeordnet. Die Sprachwerte a(h) bis a(k) haben am besten zum Wort w gepaßt.Die folgenden Sprachwerte a(k+1) bis a(i-1) waren wiederum dem Wort x am ähnlichsten. Entsprechend waren die Sprachwerte a(i) und folgende dem Wort y am ähnlichsten, usw.. Nach dem abgeschlossenen Vergleich beider Wörter x und y wird durch das beschriebene Verfahren die syntaktische Kategorie B verifiziert, und damit sind für die syntaktische Kategorie A die die erste Teilfolge bildenden Elemente w und B verifiziert. Sobald auch die Hypothese für das Wort z abgeschlossen ist, ist die Kategorie A vollständig verifiziert, und es wird nach der danachfolgenden, in Fig. 4 nicht näher dargestellten Kategorie eine Hypothese aufgebaut. Auf diese Weise entstehen bei dem beschriebenen Verfahren immer nur Hypothesen, die garantiert von Anfang an bis zum momentanen Wert grammatisch korrekt geschlossen verlaufen, und dies gilt bis zum Ende des Sprachsignals, d.h. bis zum letzten Sprachwert.

In Fig. 5 ist schematisch das Blockschaltbild einer Anordnung zur Durchführung des beschriebenen Verfahrens dargestellt. Das akustische Sprachsignal wird über das Mikrofon 62 aufgenommen und in ein elektrisches Signal umgesetzt, und dieses wird in der Anordnung 64 digitalisiert, und es werden daraus Sprachwerte gebildet, die beispielsweise Kurzzeitspektren des Sprachsignals, LPC-Koeffizienten oder auch Phoneme sein können. Diese Sprachwerte werden nacheinander als Mehrbit-Datenwörter über die Verbindung 65 dem Vergleicher 66 zugeführt.

Dieser erhält über die Verbindung 67 Referenzdatenwörter aus einem Speicher 68, der für jedes Wort eines vorgegebenen Vokabulars eine Folge von Referenzdaten enthält, die auf entsprechende Weise wie die Datenwörter auf der Verbindung 65 in einer früheren Lernphase gebildet worden sind. Die einzelnen Wörter im Referenzdatenspeicher 68 werden entweder über die Verbindung 85 von dem Speicher 76 oder über die Verbindung 85b von einem Hilfsspeicher 80 adressiert, die beide später erläutert werden. Die einzelnen Referenzdaten innerhalb des Wortes werden über die Verbindung 63 von dem Vergleicher 66 oder von einer Steueranordnung 72 adressiert, abhängig davon, in welcher an sich bekannten Weise der Vergleich im einzelnen durchgeführt wird.

Die vom Vergleicher 66 gebildeten Vergleichsergebnisse werden der Steueranordnung 72 zugeführt und dort verarbeitet. Diese Steueranordnung 72, die beispielsweise ein Microprozessor sein kann, adressiert über die Verbindung 75 einen ersten Speicher 70, der die Angaben der ersten Liste über die syntaktischen Kategorien und deren Zuordnung untereinander und zu Wörtern bzw. Wortklassen enthält und diese über die Verbindung 73 der Steuereinheit 72 zuführt. Diese bildet gemäß dem beschriebenen Verfahren Daten für die dritte Liste, für die ein dritter Speicher 78 vorgesehen ist, der von der Steuereinheit 72 über die Verbindung 77 adressiert wird und über die Verbindung 79 die einzuschreibenden Daten empfängt. In entsprechender Weise werden auch die aus der dritten Liste ausgelesenen Daten aus dem Speicher 78 über die Verbindung 79 der Steuereinheit 72 zugeführt, so daß die Verbindung 79 zweckmäßig bidiretional ausgebildet ist.

Die aus der dritten Liste gemäß dem beschriebenen Verfahren gebildeten Einträge für die zweite Liste werden von der Steuereinheit 72 dem Speicher 76, der über die Verbindung 81 adressiert wird, über die Verbindung 83 zugeführt. Beim Eintragen wird dabei die nächste freie Stelle in der zweiten Liste, die gegebenenfalls durch das Löschen eines Wortes freigeworden ist, adressiert, und zum Verarbeiten eines neuen, über die Verbindung 65 dem Vergleicher 66 zugeführten Sprachwertes werden alle Einträge der zweiten Liste im Speicher 76 nacheinander adressiert. Sofern die zweite Liste in jedem Eintrag einen unmittelbaren Hinweis auf jeweils ein Wort enthält, wird dieser Teil des Eintrags über die Verbindung 85 dem Referenzdatenspeicher 68 als Adresse zugeführt. Falls die zweite Liste jedoch in den Einträgen Hinweise auf Wortklassen statt einzelner Wörter enthält, was bei einem umfangreichen Vokabular zweckmäßiger ist, wird dieser entsprechende Hinweis über die Verbindung 85a dem Adresseneingang eines Hilfsspeichers 80 zugeführt, der an jeder Adressenstelle die Adressen des Referenzdatenspeichers 68 für die zur Wortklasse gehörigen einzelnen Wörter enthält, und diese Adressen werden über die Verbindung 85b nacheinander dem Referenzdatenspeicher zugeführt. Abhängig vom Ablauf des Vergleichs der bisherigen Folge von Sprachwerten mit Referenzdaten werden über die Verbindung 63 jeweils die momentan benötigten Referenzdaten innerhalb des jeweiligen Wortes adressiert.

Sobald das Ende der Folge von Referenzdaten für ein Wort erreicht wird, wird dies über die Verbindung 69 der Steuereinheit 72 gemeldet. Diese ergänzt daraufhin die dritte Liste im Speicher 78 und bildet gegebenenfalls neue Einträge für weitere zu vergleichende Wörter bzw. Wortklassen in der zweiten Liste im Speicher 76, wie in dem vorstehend beschriebenen Verfahren angegeben, und danach wird dann wieder der nächste Sprachwert auf der Verbindung 65 verarbeitet.

Wenn der letzte Sprachwert des Sprachsignals eingegangen ist, was beispielsweise durch die Erkennung einer längeren Sprachpause ermittelt werden kann, wird aus der dritten Liste im Speicher 68 die Wortfolge mit dem besten Bewertungswert ausgelesen und über die Verbindung 71 einer Ausgabeanordnung 74 zugeführt, die beispielsweise eine Anzeigevorrichtung oder ein Drucker oder auch ein Speicher sein kann.

## Patentansprüche

1. Verfahren zur Erkennung eines aus zusammenhängend gesprochenen Wörtern abgeleiteten Sprachsignals, das aus einer zeitlichen Folge von Sprachwerten besteht, von denen jeder einen Abschnitt des Sprachsignals angibt, wobei die Sprachwerte mit vorgegebenen gespeicherten Referenzwerten verglichen werden, von denen jeweils eine Gruppe von Referenzwerten ein Wort eines vorgegebenen Vokabulars darstellt, und die Vergleichsergebnisse über verschiedene Folgen von Kombinationen von Referenzwerten und Sprachwerten je Folge aufsummiert werden und nur solche Folgen von Wörtern berücksichtigt werden, deren Reihenfolge gemäß einer vorgegebenen gespeicherten ersten Liste zulässig sind, die für vorgegebene syntaktische Kategorien je Kategorie mindestens eine Zuordnung zu einer Kombination von weiteren syntaktischen Kategorien und/oder Wörtern enthält,
dadurch gekennzeichnet,
daß eine zweite Liste, die mindestens Hinweise auf die Referenzwerte aller derjenigen Wörter, die mit dem jeweils nächsten Sprachwert verglichen werden, sowie je Wort eine Folgenummer enthält, und
eine dritte Liste während des Ablaufs des Verfahrens erzeugt werden, die für jeden Sprachwert, der mit dem letzten Referenzwert mindestens eines Wortes verglichen worden ist, eine Gruppe mit jeweils mehreren Einträgen enthält, von denen jeder Eintrag außer einer momentanen Folgenummer
a) einen Hinweis auf eine syntaktische Kategorie der ersten Liste,
b) eine erste Angabe für eine Folge von verglichenen Wörtern und/oder syntaktischen Kategorien, die Folgen von bereits verglichenen Sprachwerten zugeordnet sind,
c) eine zweite Angabe für eine Folge von Wörtern und/oder syntaktischen Kategorien, die aufgrund der ersten Liste den noch folgenden Sprachwerten zugeordnet werden kann,
d) eine dem jeweiligen Eintrag zugeordnete weitere Folgenummer,
e) einen ersten Bewertungswert,
f) einen zweiten Bewertungswert und
g) eine Folge von verglichenen Wörtern enthält,
- daß mindestens nach jedem Vergleich eines neuen Sprachwertes mit dem letzten Referenzwert mindestens eines Wortes eine neue Folgenummer bestimmt wird und nach jedem solchen Vergleich die zu der Folgenummer, die in der zweiten Liste bei diesem Wort gespeichert ist, gehörende Gruppe von Einträgen der dritten Liste auf solche Einträge durchsucht wird, in denen die in der zweiten Angabe enthaltene Folge mit dem verglichenen Wort beginnt, und für jeden solchen vorhandenen Eintrag ein neuer Eintrag für die zur neuen Folgenummer gehörende neue Gruppe der dritten Liste abgeleitet wird,
- daß danach für jeden neuen Eintrag, bei dem die in der zweiten Angabe enthaltene verkürzte Folge mit einer syntaktischen Kategorie beginnt, für die in der ersten Liste mindestens eine Zuordnung vorhanden ist, erste weitere Einträge in der neuen Gruppe vorgenommen werden und ferner für jeden der neuen und ersten weiteren Einträge der neuen Gruppe, für den die zweite Angabe eine leere Folge enthält, ein zweiter weiterer Eintrag für die neue Gruppe abgeleitet wird,
- daß die Ableitung und Vornahme der ersten und zweiten weiteren Einträge abwechselnd so oft wiederholt wird, bis nach mindestens einem ersten weiteren Eintrag kein zweiter weiterer Eintrag erfolgt,
- daß danach für alle Einträge der neuen Gruppe, bei denen die zweite Folge mit einem zu erkennenden Wort beginnt, ein Hinweis auf die Referenzdaten dieses Wortes in die zweite Liste eingetragen wird,
- daß danach der nächste Sprachwert mit den Referenzwerten aller in der zweiten Liste enthaltenen Wörter verglichen wird und
- daß dieser Ablauf von Verfahrensschritten wiederholt wird bis zum letzten Sprachwert des zu erkennenden Sprachsignals, nach dessen Verarbeitung die letzte Gruppe der dritten Liste auf alle Einträge geprüft wird, die einen Hinweis auf die syntaktische Anfangs-Kategorie und als zweite Angabe eine leere Folge und als Folgenummer diejenige der ersten Gruppe enthalten, und aus demjenigen dieser Einträge, der den kleinsten ersten Bewertungswert aufweist, die Folge von verglichenen Wörtern ausgelesen und ausgegeben wird.

2. Verfahren nach Anspruch 1,
dadurch gekennzeichnet,
- daß vor dem Vergleich des ersten Sprachwertes die erste Gruppe in ersten Einträgen je einen Hinweis auf eine syntaktische Anfangs-Kategorie, als erste Angabe eine leere Folge, als zweite Angabe je eine andere der der Anfangs-Kategorie zugeordneten Kombinationen und für die beiden Bewertungswerte einen Anfangswert sowie in weiteren Einträgen alle aus den Kombinationen der zweiten Angabe ableitbaren Kategorien mit je zugehöriger Kombination enthält,
- daß jeder neue Eintrag in der ersten Angabe eine um das verglichene Wort verlängerte Folge, in der zweiten Angabe eine um das verglichene Wort verkürzte Folge, als ersten Bewertungswert den um die Summe der Vergleichsergebnisse des Wortes erhöhten Bewertungswert, als Folge von verglichenen Wörtern die um das verglichene Wort verlängerte Folge und im übrigen die Werte des vorhandenen Eintrags erhält,
- daß die ersten weiteren Einträge je einen Hinweis auf die syntaktische Kategorie des neuen Eintrags, aus dem dieser erste weitere Eintrag abgeleitet wird, in der ersten Angabe eine leere Folge, in der zweiten Angabe je eine andere der syntaktischen Kategorie zugeordnete Kombination als Folge, als weitere Folgenummer die neue Folgenummer, für beide Bewertungswerte den Bewertungswert des neuen Eintrags und als Folge verglichener Wörter eine leere Folge enthalten,
- daß für jeden zweiten weiteren Eintrag aus derjenigen Gruppe, die in der weiteren Folgenummer des betreffenden neuen oder weiteren ersten Eintrag angegeben ist, derjenige frühere Eintrag ausgelesen wird, bei dem die zur zweiten Angabe gehörende Folge mit der syntaktischen Kategorie beginnt, auf die dieser neue oder erste weitere Eintrag der neuen Gruppe einen Hinweis enthält, wobei der zweite Eintrag den Hinweis auf die syntaktische Kategorie des früheren Eintrags, in der ersten Angabe eine um die syntaktische Kategorie des momentanen neuen oder ersten weiteren Eintrags verlängerte Folge, in der zweiten Angabe eine um dieselbe syntaktische Kategorie verkürzte Folge, als weitere Folgenummer die Folgenummer des früheren Eintrags, als ersten Bewertungswert die Summe aus dem ersten Bewertungswert des früheren Eintrags und der Differenz zwischen den beiden Bewertungswerten des momentanen Eintrags, als zweiten Bewertungswert den entsprechenden des früheren Eintrags und die um die Folge verglichener Wörter des Eintrags der momentanen Gruppe verlängerte Folge von verglichenen Wörtern des früheren Eintrags enthält, und
- daß in die zweite Liste jeder Hinweis auf die Referenzdaten zusammen mit dem zugehörigen ersten Bewertungswert und der Folgenummer des betreffenden Eintrags aufgenommen wird.

3. Verfahren nach Anspruch 2,
dadurch gekennzeichnet, daß jeder erste und zweite weitere Eintrag nur vorgenommen wird, sofern in der neuen Gruppe kein Eintrag vorhanden ist, der denselben Hinweis, dieselbe erste und zweite Angabe und dieselbe weitere Folgenummer enthält und in dem der erste Bewertungswert kleiner ist als der erste Bewertungswert des beabsichtigten weiteren Eintrags, und im Falle eines solchen bereits vorhandenen Eintrags, jedoch mit größerem Bewertungswert, dieser gelöscht wird.

4. Verfahren nach Anspruch 2 oder 3,
dadurch gekennzeichnet, daß ein Hinweis auf Referenzdaten in die zweite Liste nur aufgenommen wird, sofern darin kein Hinweis auf die Referenzdaten desselben Wortes und derselben Folgenummer mit kleinerem Bewertungswert bereits vorhanden ist, wobei im Falle eines solchen bereits vorhandenen Eintrags, jedoch mit größerem Bewertungswert, dieser gelöscht wird.

5. Verfahren nach einem der Ansprüche 2 bis 4,
dadurch gekennzeichnet, daß jeder neue und jeder erste und zweite weitere Eintrag nur vorgenommen wird, wenn dessen erster Bewertungswert kleiner ist als ein Schwellwert, der gleich dem um eine Konstante vergrößerten ersten kleinsten Bewertungswert aller momentan in der zweiten Liste enthaltener Einträge ist.

6. Verfahren nach Anspruch 5,
dadurch gekennzeichnet, daß in der zweiten Liste jeder Eintrag gelöscht wird, dessen erster Bewertungswert größer ist als der Schwellwert.

7. Verfahren nach Anspruch 6,
dadurch gekennzeichnet, daß für die Bestimmung des Schwellwerts als kleinster erster Bewertungswert der Einträge der zweiten Liste derjenige beim vorhergehenden Sprachwert verwendet wird.

8. Verfahren nach einem der Ansprüche 2 bis 7,
dadurch gekennzeichnet, daß in der zweiten Liste ein Wort gelöscht wird, wenn die Anzahl der Folgenummern, die zwischen der neuen Folgenummer und der beim Wort gespeicherten Folgenummer liegt, größer als ein bei den Referenzwerten für dieses Wort enthaltener Grenzwert ist.

9. Verfahren nach einem der vorhergehenden Ansprüche,
dadurch gekennzeichnet, daß die erste Liste Zuordnungen von vorgegebenen syntaktischen Kategorien zu anderen syntaktischen Kategorien und/oder Wortklassen anstelle Wörtern enthält und daß für alle Einträge der neuen Gruppe, bei denen die zweite Folge mit einer Wortklasse beginnt, ein Hinweis auf diese Wortklasse anstelle auf Referenzdaten eines Wortes in die zweite Liste aufgenommen wird.

10. Verfahren nach Anspruch 9,
dadurch gekennzeichnet, daß mit jedem Hinweis in der zweiten Liste eine Hilfsliste aufgerufen wird, die für jede Wortklasse die Hinweise auf die Referenzdaten der zu dieser Klasse gehörenden Wörter enthält, und diese Hinweise die entsprechenden Referenzwerte aus der weiteren Liste aufrufen.

11. Anordnung zum Durchführen des Verfahrens nach einem der Ansprüche 1 bis 10, mit einem Wandler (62, 64) zum Umsetzen eines gesprochenen Satzes in ein elektrisches Sprachsignal und zum Bilden von Sprachwerten, mit einem ersten Speicher (70), der Angaben über syntaktische Kategorien von natürlicher Sprache und deren Zuordnung zu weiteren syntaktischen Kategorien und/oder Angaben für Wörter bzw. Wortklassen enthält, mit einem weiteren Speicher (68) für Referenzwerte, die aus früher gesprochenen Sätzen in entsprechender Weise wie die Sprachwerte gebildet sind, und mit einer Vergleichsanordnung (66), die an einem Ausgang des Wandlers (62, 64) und an einem Datenausgang des weiteren Speichers (68) angeschlossen ist zum Liefern von Vergleichsergebnissen aus dem Vergleich von Sprachwerten mit Referenzwerten,
dadurch gekennzeichnet, daß ein zweiter Speicher (76), der die Einträge für die zweite Liste aufnimmt, und ein dritter Speicher (78) vorgesehen sind, der die Einträge für die dritte Liste aufnimmt, wobei der Inhalt des zweiten Speichers (76) mindestens einen Teil der Adressen des weiteren Speichers (68) angibt, und daß eine Steuereinheit (72) vorhanden ist, die eingerichtet ist, um den ersten, den zweiten und den dritten Speicher (70, 76, 78) zu adressieren und Daten in den zweiten und den dritten Speicher (76, 78) einzuschreiben und aus diesen sowie aus dem ersten Speicher (70) auszulesen und bei Empfang eines Wortendesignals für mindestens ein Wort die neuen, die ersten und die zweiten weiteren Einträge für den dritten Speicher (70) und danach die Einträge für den zweiten Speicher (76) zu bilden und in diese einzuschreiben und nach Verarbeitung des letzten Sprachsignals die im dritten Speicher (78) enthaltene vollständige Wortkette mit dem geringsten Bewertungswert an eine Ausgabeeinheit (74) auszugeben.

12. Anordnung nach Anspruch 11,
dadurch gekennzeichnet, daß die Steuereinheit (72) ein Prozessor, insbesondere ein programmierter Microprozessor ist.

13. Anordnung nach Anspruch 11 oder 12,
dadurch gekennzeichnet, daß der Ausgang (85a) des zweiten Speichers (76) mit dem Adresseneingang eines Hilfsspeichers (80) gekoppelt ist, dessen Ausgang (85b) mit einem Teiladresseneingang des weiteren Speichers (68) gekoppelt ist.

## Claims

1. A method for the recognition of a speech signal derived from coherently spoken words, which speech signal consists of a temporal sequence of speech values, each of which specifies a section of the speech signal, the speech values being compared with predetermined stored reference values, each time a group of reference values representing one word of a predetermined vocabulary, the comparison results being summed over various sequences of combinations of reference values and speech values per sequence, and only those sequences of words being taken into account whose order is permissible in conformity with a predetermined, stored first list containing, for predetermined syntactic categories, at least one assignment per category to a combination of further syntactic categories and/or words, characterized in that a second list, containing at least references to the reference values of all words compared with the respective next speech value as well as a sequence number per word, and a third list are generated in the course of the process, which third list contains, for each speech value which has been compared with the last reference value of at least one word, a group of each time a plurality of entries, each entry containing, in addition to a current sequence number:
a) a reference to a syntactic category of the first list,
b) a first specification for a sequence of compared words and/or syntactic categories assigned to sequences of already compared speech values,
c) a second specification for a sequence of words and/or syntactic categories which can be assigned to the subsequent speech values on the basis of the first list,
d) a further sequence number assigned to the respective entry,
e) a first evaluation value,
f) a second evaluation value, and
g) a sequence of compared words,
- in that, at least after every comparison of a new speech value with the last reference value of at least one word, a new sequence number is determined and, after each such comparison, the group of entries of the third list associated with the sequence number stored in the second list at this word is searched for entries in which the sequence contained in the second specification begins with the compared word and, for each such entry present, a new entry is derived for the new group of the third list associated with the new sequence number,
- in that subsequently, for each new entry where the shortened sequence contained in the second specification begins with a syntactic category for which at least one assignment is present in the first list, first further entries are made in the new group and, furthermore, a second further entry for the new group is derived for each of the new and first further entries of the new group for which the second specification contains an empty sequence,
- in that deriving and making the first and second further entries alternately is repeated until, after at least one first further entry, no second further entry occurs,
- in that subsequently, for all entries of the new group where the second sequence begins with a word to be recognized, a reference to the reference data of this word is entered into the second list,
- in that subsequently the next speech value is compared with the reference values of all words contained in the second list, and
- in that this sequence of process steps is repeated until the last speech value of the speech signal to be recognized, after the processing of which the last group of the third list is checked for all entries containing a reference to the syntactic initial category and, as a second specification, an empty sequence and, as a sequence number that of the first group and, from among these entries, the sequence of compared words is read and output from the entry having the smallest first evaluation value.

2. A method as claimed in Claim 1, characterized
- in that before the comparison of the first speech value, the first group contains, in first entries, a respective reference to a syntactic initial category, an empty sequence as a first specification, a respective other one of the combinations assigned to the initial category as a second specification, and an initial value for the two evaluation values as well as, in further entries, all categories which can be derived from the combinations of the second specification with a respective associated combination,
- in that each new entry in the first specification contains a sequence extended by the compared word and a sequence shortened by the compared word in the second specification, the evaluation value increased by the sum of the comparison results of the word as a first evaluation value, the sequence extended by the compared word as the sequence of compared words, and furthermore the values of the relevant entry,
- in that the first further entries contain a respective reference to the syntactic category of the new entry, wherefrom this first further entry is derived, an empty sequence in the first specification, a respective other combination assigned to the syntactic category as a sequence in the second specification, the new sequence number as the further sequence number, the evaluation value of the new entry for both evaluation values, and an empty sequence as the sequence of compared words,
- in that for each second further entry, from that group specified in the further sequence number of the relevant new or further first entry, that earlier entry is read where the sequence associated with the second specification begins with the syntactic category whereto this new or first further entry of the new group contains a reference, the second entry containing the reference to the syntactic category of the earlier entry, a sequence extended by the syntactic category of the current new or first further entry in the first specification, a sequence shortened by the same syntactic category in the second specification, the sequence number of the earlier entry as the further sequence number, the sum of the first evaluation value of the earlier entry and the difference between the two evaluation values of the current entry as the first evaluation value, the corresponding evaluation value of the earlier entry and the sequence of compared words of the earlier entry extended by the sequence of compared words of the entry of the current group as the second evaluation value, and
- in that each reference to the reference data, together with the associated first evaluation value and the sequence number of the relevant entry, is entered into the second list.

3. A method as claimed in Claim 2, characterized in that each first and second further entry are made only if in the new group no entry is present which contains the same reference, the same first and second specification, and the same further sequence number and the first evaluation value is smaller than the first evaluation value of the intended further entry and, if such an entry is already present but with a greater evaluation value, the latter is deleted.

4. A method as claimed in Claim 2 or 3, characterized in that a reference to reference data is entered into the second list only if no reference to the reference data of the same word and the same sequence number with a smaller evaluation value are already present in said list and, if such an entry is already present but with a greater evaluation value, the latter is deleted.

5. A method as claimed in any one of the Claims 2 to 4, characterized in that each new and each first and second further entry is made only if its first evaluation value is smaller than a threshold value which is equal to the smallest first evaluation value, increased by a constant, of all entries currently contained in the second list.

6. A method as claimed in Claim 5, characterized in that every entry in the second list whose first evaluation value is greater than the threshold value is deleted.

7. A method as claimed in Claim 6, characterized in that the evaluation value of the preceding speech value is used for the determination of the threshold value as the smallest first evaluation value of the entries of the second list.

8. A method as claimed in any one of the Claims 2 to 7, characterized in that a word is deleted from the second list if the number of sequence numbers between the new sequence number and the sequence number stored at the word is greater than a limit value contained in the reference values for this word.

9. A method as claimed in any one of the preceding Claims, characterized in that the first list contains assignments of predetermined syntactic categories to other syntactic categories and/or word classes instead of words, and in that, for all entries of the new group where the second sequence begins with a word class, a reference to this word class instead of to reference data of a word is entered into the second list.

10. A method as claimed in Claim 9, characterized in that for each reference in the second list an auxiliary list is called which contains, for each word class, the references to the reference data of the words belonging to this class, and these references call the corresponding reference values from the further list.

11. A device for carrying out the method claimed in any one of Claims 1 to 10, comprising a transducer (62,64) for converting a spoken sentence into an electric speech signal, a unit (64) for forming speech values, a first memory (70) containing specifications on syntactic categories of natural language and their assignment to further syntactic categories and/or specifications for words or word classes, a further memory (68) for reference values formed, analogously to the speech values, from sentences spoken earlier, and a comparison device (66) which is connected to an output of the transducer (62,64) and to a data output of the further memory (68) so as to produce comparison results from the comparison of speech values with reference values, characterized in that there are provided a second memory (76) which stores the entries for the second list and a third memory (78) which stores the entries for the third list, the contents of the second memory (76) specifying at least a part of the addesses of the further memory (68), and in that there is provided a control unit (72) which is operative to address the first, the second and the third memory (70,76,78) and to write data into the second and the third memory (76,78) and to read data from these memories as well as from the first memory (70) and, upon reception of a word end signal for at least one word, to form the new, the first and the second further entries for the third memory (70) and subsequently the entries for the second memory (76) and to write these entries therein and, after the processing of the last speech signal, to output the complete word string with the smallest evaluation value contained in the third memory (78) to an output device (74).

12. A device as claimed in Claim 11, characterized in that the control unit (72) is a processor, in particular a programmed microprocessor.

13. A device as claimed in Claim 11 or 12, characterized in that the output (85a) of the second memory (76) is coupled to the address input of an auxiliary memory (80), the output (85b) of which is coupled to a partial-address input of the further memory (68).

## Revendications

1. Procédé d'identification d'un signal vocal découlant de mots enchaînés, lequel signal est constitué d'une séquence chronologique de valeurs vocales, dont chacune indique une section du signal vocal, les valeurs vocales étant comparées à des valeurs de référence prédéfinies mémorisées, parmi lesquelles, respectivement, un groupe de valeurs de référence représente un mot d'un vocabulaire prédéfini, et les résultats des comparaisons sont sommés sur diverses séquences de combinaisons de valeurs de référence et de valeurs vocales, par séquence, et seules sont prises en compte les séquences de mots dont la succession est autorisée selon une première liste prédéfinie mémorisée qui contient, pour des catégories syntaxiques prédéfinies, par catégorie, au moins une affectation à une combinaison d'autres catégories syntaxiques et/ou d'autres mots,
caractérisé en ce que :
on élabore une deuxième liste, qui contient au moins des renvois aux valeurs de référence de tous les mots qui sont comparés à la valeur vocale suivante respective, ainsi qu'un numéro de séquence par mot, et
on élabore, au cours du déroulement du procédé, une troisième liste qui contient, pour chaque valeur vocale qui a été comparée à la dernière valeur de référence d'au moins un mot, un groupe de respectivement plusieurs entrées dans lequel chaque position contient, en plus d'un numéro de séquence provisoire :
a) un renvoi à une catégorie syntaxique de la première liste,
b) une première indication pour une séquence de mots et/ou de catégories syntaxiques comparés, qui sont affectés à des séquences de valeurs vocales déja comparées,
c) une seconde indication pour une séquence de mots et/ou de catégories syntaxiques, que l'on peut affecter, sur base de la première liste, aux valeurs vocales qui suivent encore;
d) un autre numéro de séquence affecté à l'entrée respective;
e) une première valeur d'évaluation;
f) une seconde valeur d'évaluation, et
g) une séquence de mots comparés,
- au moins après chaque comparaison d'une nouvelle valeur vocale avec la dernière valeur de référence d'au moins un mot, on détermine un nouveau numéro de séquence et, après chacune de ces comparaisons, on balaie le groupe d'entrées de la troisième liste appartenant au numéro de séquence qui est mémorisé dans la deuxième liste pour ce mot, pour détecter les entrées dans lesquelles la séquence contenue dans la seconde indication commence par le mot comparé et on en déduit, pour chacune de ces entrées présentes, une nouvelle entrée pour le nouveau groupe de la troisième liste appartenant au nouveau numéro de séquence,
- ensuite, peur chaque nouvelle entrée, dans laquelle la séquence abrégée contenue dans la seconde indication commence par une catégorie syntaxique pour laquelle au moins une affectation est présente dans la première liste, on met en oeuvre des premières autres positions dans le nouveau groupe et, par ailleurs, on déduit, pour chacune des nouvelles et premières autres entrées du nouveau groupe, pour lesquelles la seconde indication contient une séquence vide, une seconde autre entrée pour le nouveau groupe,
- la déduction et la mise en oeuvre des premières et secondes autres entrées sont répétées en alternance assez fréquemment peur que, après au moins une première autre entrée, il n'y ait aucune autre seconde entrée,
- ensuite, pour toutes les entrées du nouveau groupe, dans lesquelles la seconde séquence commence par un mot à identifier, un renvoi aux données de référence de ce mot est introduit dans la deuxième liste,
- puis on compare la valeur vocale suivante avec les valeurs de référence de tous les mots contenus dans la deuxième liste, et
- on répète ce déroulement des stades du procédé jusqu'à la dernière valeur vocale du signal vocal à identifier, après le traitement de laquelle on teste le dernier groupe de la troisième liste sur toutes les entrées qui contiennent un renvoi à la catégorie syntaxique de départ, puis à titre de seconde indication une séquence vide et à titre de numéro de séquence celui du premier groupe, et ensuite, à partir de celle de ces entrées qui présente la première valeur d'évaluation la plus petite, on lit et on sort la séquence de mots comparés.

2. Procédé selon la revendication 1, caractérisé en ce que :
- avant la comparaison de la première valeur vocale, le premier groupe contient, dans les premières entrées, chaque fois un renvoi à une catégorie de départ syntaxique, comme première indication une séquence vide et comme seconde indication, chaque fois, une autre des combinaisons affectées à la catégorie de départ et, pour les deux valeurs d'évaluation, une valeur de départ ainsi que, dans d'autres entrées, toutes les catégories qui peuvent se déduire des combinaisons de la seconde indication avec respectivement la combinaison associée,
- chaque nouvelle entrée reçoit, dans la première indication, une séquence augmentée du mot comparé, dans la seconde indication, une séquence diminuée du mot comparé, comme première valeur d'évaluation, la valeur d'évaluation augmentée de la somme des résultats des comparaisons du mot, comme séquence de mots comparés, la séquence augmentée du mot comparé et, en outre, les valeurs de l'entrée présente,
- les premières autres entrées contiennent chacune, un renvoi à la catégorie syntaxique de la nouvelle entrée, de laquelle cette première autre entrée découle, dans la première indication une séquence vide, dans la seconde indication, chaque fois, une autre combinaison affectée à la catégorie syntaxique à titre de séquence, comme autre numéro de séquence, le nouveau numéro de séquence, pour les deux valeurs d'évaluation, la valeur d'évaluation de la nouvelle entrée et comme séquence de mots comparés, une séquence vide,
- pour chaque seconde autre entrée du groupe qui est indiquée dans l'autre numéro de séquence de la nouvelle ou de l'autre première entrée en question, on lit l'entrée précédente dans laquelle la séquence appartenant à la seconde indication commence par la catégorie syntaxique dans laquelle cette nouvelle ou première autre entrée du nouveau groupe contient un renvoi, la seconde entrée contenant le renvoi à la catégorie syntaxique de l'entrée précédente, dans la première indication, une séquence augmentée de la catégorie syntaxique de l'entrée nouvelle ou de la première autre entrée momentanée, dans la seconde indication une séquence diminuée de cette catégorie syntaxique, comme autre numéro de séquence, le numéro de séquence de la position précédente, comme première valeur d'évaluation la somme de la première valeur d'évaluation, de l'entrée précédente et de la différence entre les deux valeurs d'évaluation de l'entrée momentanée, comme seconde valeur d'évaluation, celle qui correspond à l'entrée précédente et la séquence de mots comparés de l'entrée précédente augmentée de la séquence de mots comparés de l'entrée du groupe momentané, et
- dans la seconde liste, chaque renvoi aux données référence est repris avec la première valeur d'évaluation associée et le numéro de séquence de l'entrée en question.

3. Procédé selon la revendication 2, caractérisé en ce qu'on ne met en oeuvre chaque première et seconde autre entrée que dans la mesure où il n'y a pas dans le nouveau groupe d'entrée qui contienne le même renvoi, les mêmes première et seconde indications et le même autre numéro de séquence et dans laquelle la première valeur d'évaluation est plus petite que la première valeur d'évaluation de l'autre entrée envisagée et, dans le cas où une telle entrée est déjà présente, mais avec une valeur d'évaluation plus grande, celle-ci est effacée.

4. Procédé selon la revendication 2 ou 3, caractérisé en ce qu'on ne reprend un renvoi à des données de référence dans la deuxième liste que dans la mesure où il n'y a pas déjà de renvoi aux données de référence du même mot et du même numéro de séquence avec une valeur d'évaluation plus petite, étant entendu que dans le cas où une telle entrée est déjà présente, mais avec une valeur d'évaluation plus grande, cette entrée sera effacée.

5. Procédé selon l'une quelconque des revendications 2 à 4, caractérisé en ce que chaque nouvelle et chaque première et seconde autres entrées ne sont traitées que lorsque leur première valeur d'évaluation est plus petite qu'une valeur de seuil qui est égale à la valeur d'évaluation la plus petite augmentée d'une constante de toutes les entrées momentanément contenues dans la deuxième liste.

6. Procédé selon la revendication 5, caractérisé en ce que, dans la deuxième liste, chaque entrée dont la première valeur d'évaluation est supérieure à la valeur de seuil est effacée.

7. Procédé selon la revendication 6, caractérisé en ce qu'on utilise pour la détermination de la valeur de seuil comme plus petite première valeur d'évaluation des entrées de la deuxième liste, celle qui correspond à la valeur vocale précédente.

8. Procédé selon l'une quelconque des revendications 2 à 7, caractérisé en ce que, dans la deuxième liste, on efface un mot lorsque le nombre de numéros de séquences, qui se situe entre le nouveau numéro de séquence et le numéro de séquence mémorisé dans le mot, est supérieur à une valeur limite contenue dans les valeurs de référence pour ce mot.

9. Procédé selon l'une quelconque des revendications précédentes, caractérisé en ce que la première liste contient des affectations de catégories syntaxiques prédéfinies à d'autres catégories syntaxiques et/ou d'autres classes de mots en lieu et place de mots et, pour toutes les entrées du nouveau groupe impliquant le début de la seconde séquence par une classe de mots, on reprend un renvoi à cette classe de mots au lieu d'un renvoi aux données de référence d'un mot dans la deuxième liste.

10. Procédé selon la revendication 9, caractérisé en ce qu'on appelle, avec chaque renvoi de la deuxième liste, une liste auxiliaire qui contient, pour chaque classe de mots, les renvois aux données de référence des mots appartenant à cette classe, ces renvois appelant les valeurs de référence correspondantes de l'autre liste.

11. Montage pour exécuter le procédé selon l'une quelconque des revendications 1 à 10, comprenant un convertisseur (62, 64) pour transformer une phrase parlée en un signal vocal électrique et pour former des valeurs vocales, une première mémoire (70), qui contient des indications sur les catégories syntaxiques de la parole naturelle et leur affectation à d'autres catégories syntaxiques et/ou indications pour des mots ou des classes de mots, une autre mémoire (68) pour les valeurs de référence, qui sont formées à partir de phrases exprimées précédemment de manière correspondant aux valeurs vocales, et un système de comparaison (66) qui est raccordé à une sortie du convertisseur (62, 64) et à une sortie de données de l'autre mémoire (68) pour fournir des résultats de comparaison à partir de la comparaison de valeurs vocales et de valeurs de référence, caractérisé en ce qu'il est prévu une seconde mémoire (76), qui reçoit les entrées pour la deuxième liste, et une troisième mémoire (78) qui reçoit les entrées pour la troisième liste, le contenu de la seconde mémoire (76) indiquant au moins une partie des adresses de l'autre mémoire (68), et une unité de commande (72) qui est aménagée pour adresser la première, la deuxième et la troisième mémoire (70, 76, 78), transcrire des données dans la deuxième et la troisième mémoire (76, 78) et les extraire de celles-ci ainsi que de la première mémoire (70), et former, à la réception d'un signal de fin de mot, pour au moins un mot, la nouvelle, la première et la deuxième autres entrées pour la troisième mémoire (70) et ensuite les entrées pour la deuxième mémoire (76) et les transcrire dans celle-ci et, après traitement du dernier signal vocal, sortir la chaîne de mots complète contenue dans la troisième mémoire (78) avec la valeur d'évaluation la plus faible à une unité de sortie (74).

12. Montage selon la revendication 11, caractérisé en ce que l'unité de commande (72) est un processeur, en particulier un microprocesseur programmé.

13. Montage selon la revendication 11 ou 12, caractérisé en ce que la sortie (85a) de la deuxième mémoire (76) est couplée à l'entrée d'adressage d'une mémoire auxiliaire (80) dont la sortie (85b) est couplée à une entrée d'adressage partiel de l'autre mémoire (68).
